# EUROPÄISCHE PATENTSCHRIFT

(11) **EP 2 262 863 B1**
(45) Veröffentlichungstag und Bekanntmachung des Hinweises auf die Patenterteilung: **04.09.2013**
(21) Anmeldenummer: 09719567.1
(22) Anmeldetag: 27.02.2009
(51) Int. Cl.: C09B 67/02, C09B 67/08

(54) **MIKROKAPSELN, IHRE HERSTELLUNG UND VERWENDUNG**
MICROCAPSULES, PRODUCTION AND USE THEREOF
MICROCAPSULES, LEUR PRODUCTION ET LEUR UTILISATION

(30) Priorität: 03.03.2008 EP 08152194
(43) Veröffentlichungstag der Anmeldung: 22.12.2010
(73) Patentinhaber: BASF SE, 67056 Ludwigshafen (DE)
(72) Erfinder: JUNG, Marc Rudolf, 67551 Worms (DE); REICHERT, Jürgen, 67117 Limburgerhof (DE)
(86) Internationale Anmeldenummer: PCT/EP2009/052337
(87) Internationale Veröffentlichungsnummer: WO 2009/112378

(56) Entgegenhaltungen:
- EP-A- 0 623 662
- EP-A- 0 692 517
- EP-A- 1 321 182
- WO-A-99/24525
- WO-A-02/064246
- WO-A-02/090445
- WO-A-03/016650
- US-A- 3 919 110
- US-A- 5 585 051
- US-A1- 2007 202 185

## Beschreibung

Die vorliegende Erfindung betrifft Mikrokapsein, wie sie in Anspruch 1 definiert sind.

Weiterhin betrifft die vorliegende Erfindung ein Verfahren zur Herstellung der erfin-dungsgemäßen Mikrokapseln. Weiterhin betrifft die vorliegende Erfindung die Verwendung der erfindungsgemäßen Mikrokapseln zur Ausrüstung von Substraten. Schließ-lich betrifft die vorliegende Erfindung Substrate, die mit den erfindungsgemäßen Mikrokapseln ausgerüstet sind.

Mikroverkapselte Latentwärmespeicher, die auch als "Phase Change Material" oder kurz PCM bezeichnet werden können, finden immer breitere Anwendung, beispielsweise in Baumaterialien oder in Textilien. Die Wirkung der mikroverkapselten Latentwärmespeicher besteht im Wesentlichen darin, dass sie im Kern ein Material aufweisen, das einen Phasenübergang, vorzugsweise einen Phasenübergang fest/flüssig, in einem Temperaturbereich von -20 bis 120°C aufweist. Bei Temperaturen, die über der Temperatur des Phasenübergangs liegen, wird die Phasenübergangsenergie (Phasen-übergangsenthalpie) gespeichert. Sinkt die Umgebungstemperatur, beispielsweise im Falle eines Gebäudes die Außentemperatur oder- dadurch bedingt - die Innentemperatur, unter die Temperatur des Phasenübergangs, so findet der Phasenübergang statt und die Phasenübergangsenergie (Phasenübergangsenthalpie) wird freigesetzt und kann beispielsweise zur Temperierung des Gebäudes oder - im Falle von Bekleidungsstücken - zur Erwärmung des Körpers genutzt werden. Dieser Vorgang ist reversibel und kann beliebig oft wiederholt werden.

Um farbige Substrate mit mikroverkapselten Latentwärmespeichem auszurüsten, wird in der Regel vorgeschlagen, der Ausrüstung ein Farbmittel, insbesondere ein Pigment beizumischen. Man beobachtet jedoch, dass die Echtheiten in vielen Fällen nicht befriedigend sind. Man beobachtet daher, dass gefärbte Materialien, die mit mikroverkapselten Latentwärmespeichern ausgerüstet sind, schon bald eine weniger brillante Farbgebung aufweisen.

In den Dokumenten US,A,3 919 110, US,A,5 585 051, WO,A,02/090445 als auch WO,A,021064246 werden ebenfalls verkapselte Zusammensetzungen beschrieben, die z.T. Farbmittel im Kern enthalten.

Es bestand also die Aufgabe, ein Verfahren bereit zu stellen, durch das Substrate ausgerüstet werden können, die die Eigenschaften eines Latentwärmespeichers nutzen und die gleichzeitig eine brillante Färbung mit vorzüglicher Echtheit aufweisen. Es bestand weiterhin die Aufgabe, Stoffe bereit zu stellen, die geeignet sind, um Substrate auszurüsten, die die Eigenschaften eines Latentwärmespeichers nutzen und die gleichzeitig eine brillante Färbung mit vorzüglicher Echtheit aufweisen.

Dementsprechend wurden die eingangs definierten Mikrokapseln gefunden.

Mikrokapseln im Sinne der vorliegenden Erfindung können einen Durchmesser im Bereich von Bruchteilen von Mikrometern bis zu einem Millimeter aufweisen.

In einer Ausführungsform der vorliegenden Erfindung liegt der mittlere Durchmesser von erfindungsgemäßen Mikrokapseln (Z-Mittel, bestimmt mittels Lichtstreuung) im Bereich von 0,5 bis 100 µm, bevorzugt bis 50 µm und besonders bevorzugt bis 30 µm.

Kernmaterial (A) der erfindungsgemäßen Mikrokapseln ist ein Latentwärmespeicher-material, auch unter dem Namen PCM (Phase Change Material) bekannt. Latentwär-mespeichermaterialien sind Substanzen, die in dem Temperaturbereich, in welchem eine Wärmeübertragung vorgenommen werden soll, einen Phasenübergang aufweisen. Erfindungsgemäß handelt es sich bei Kernmaterial (A) um eine lipophile Substanz, die einen Phasenübergang fest/flüssig im Temperaturbereich von -20 bis 120°C aufweist.

Lipophil im Sinne der vorliegenden Erfindung sind solche Substanzen, die einen Oktanol-Wasser-Koeffizient (Oktanol-Wasser-Verteilungskoefflzient) größer als 1 bzw. einen log pow größer null aufweisen.

Beispielhaft seien als Kemmaterialien (A) genannt:
- aliphatische Kohlenwasserstoffverbindungen wie gesättigte oder ungesättigte C₁₀-C₄₀Kohlenwasserstoffe, die verzweigt oder bevorzugt linear sind, z.B. n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan, sowie cydische Kohlenwasserstoffe, z.B. Cyclohexan, Cyclooctan, Cyclodecan;
- aromatische Kohlenwasserstoffverbindungen wie, Naphthalin, Biphenyl, orthooder meta-Terphenyl, ein- oder mehrfach C₁-C₄₀-alkylsubstituierte und vorzugsweise n-C₁₀-C₄₀-alkylsubstituierte aromatische Kohlenwasserstoffe wie paraXylol, n-Dodecylbenzol, n-Tetradecylbenzol, n-Hexadecylbenzol, weiterhin n-Hexylnaphthalin und n-Decylnaphthatin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische, oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen der vorstehend genannten Substanzen geeignet, solange es nicht zu einer Schmelzpunkterniedrigung außerhalb des gewünschten Bereichs kommt oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, vorstehend genannten lipophilen Substanzen in ihnen lösliche Verbindungen als Kristallisationskeime zuzugeben, um so die mitunter bei besonders unpolaren lipophilen Substanzen auftretende Kristallisationsverzögerung zu verhindern. Vorteilhaft verwendet man, wie in der US 5,456,852 beschrieben, Verbindungen mit einem 20 bis 110°C höheren Schmelzpunkt als die eigentliche Kemsubstanz. Geeignete Verbindungen sind die oben als lipophile Substanzen erwähnten Fettsäuren, Fettalkohole, Fettamide sowie aliphatischen Kohlenwasserstoffverbindungen. Sie werden in Mengen von 0,1 bis 10 Gew.-% bezogen auf den Kapselkem zugesetzt.

Je nach Temperaturbereich, in dem die Anwendung der Latentwärmespeicher gewünscht ist, wählt man die lipophilen Kernmaterialien (A). Beispielsweise verwendet man für die Anwendung in Baustoffen in gemäßigtem Klima bevorzugt Kernmaterialien (A), deren Phasenübergang fest/flüssig im Temperaturbereich von 0 bis 60°C liegt. Für Innenraumanwendungen kann man lipophile Kernmaterialien mit einem Phasenübergang fest/flüssig mit Umwandlungstemperaturen von 15 bis 30°C wählen. Für Anwendungen im Textilsektor sind vor allem Umwandlungstemperaturen von 0 bis 40 °C vorteilhaft.

Bevorzugte lipophile Kernmaterialien (A) sind aliphatische Kohlenwasserstoffe, besonders bevorzugt die oben beispielhaft aufgezählten. Ganz besonders werden aliphatische Kohlenwasserstoffe mit 14 bis 20 Kohlenstoffatomen sowie deren Gemische bevorzugt.

Erfindungsgemäße Mikrokapseln weisen weiterhin eine Kapselwand (B) auf. Bei der Kapselwand handelt es sich vorzugsweise um ein organisches Polymer oder ein organisches Harz. Beispiele für organische Harze sind Aminoplastharze wie beispielsweise Melamin-Formaldehyd-Harze. Bevorzugt handelt es sich jedoch bei der Kapselwand um ein organisches Polymer, das durch Polymerisation von einem oder mehreren ethylenisch ungesättigten (Co)monomeren gebildet wird.

In der Erfindung ist die Kapselwand (B) ein (Co)polymer, das aufgebaut ist aus
30 bis 100 Gew.-%, bevorzugt bis 90 Gew.-%, mindestens eines Monomeren I, gewählt aus (Meth)acrylsäure, Maleinsäure, C₁-C₂₄-Alkylester der (Meth)acrylsäure, bevorzugt wenigstens 2 voneinander verschiedener Monomere I,
0 bis 70 Gew.-%, bevorzugt mindestens 10 Gew.-% eines oder mehrerer bi- oder polyfunktioneller Monomere (Monomere II), welche(s) in Wasser nicht löslich oder schwer löslich ist bzw. sind und
0 bis 40 Gew.-% eines oder mehrerer sonstiger Monomere (Monomere III).

Dabei sind Angaben in Gew.-% auf das Gesamtgewicht der Kapselwand (B) bezogen.

Kapselwand (B) enthält im Allgemeinen mindestens 30 Gew.-%, in bevorzugter Form mindestens 40 Gew.-%, in besonders bevorzugter Form mindestens 50 Gew.-%, insbesondere mindestens 60 Gew.-%, ganz besonders bevorzugt mindestens 70 Gew.-% sowie bis zu 100 Gew.-%, bevorzugt höchstens 90 Gew.-%, insbesondere höchstens 85 Gew.-% und ganz besonders bevorzugt höchstens 80 Gew.-% mindestens eines Monomeren I, einpolymerisiert.

Bevorzugt setzt man zur Herstellung der Kapselwand (B) mindestens 2 verschiedene Monomere I ein.

Weiterhin enthält Kapselwand (B) bevorzugt mindestens 10 Gew.-%, bevorzugt mindestens 15 Gew.-%, vorzugsweise mindestens 20 Gew.-% sowie im Allgemeinen höchstens 70 Gew.-%, vorzugsweise höchstens 60 Gew.-% und in besonders bevor zugter Form höchstens 50 Gew.-% eines oder mehrerer bi- oder polyfunktionelle Monomere einpolymerisiert, welche in Wasser nicht löslich oder schwer löslich sind (Monomere II), bezogen auf das Gesamtgewicht der Kapselwand (B).

Daneben kann Kapselwand (B) bis zu 40 Gew. %, vorzugsweise bis zu 30 Gew.%, insbesondere bis zu 20 Gew.-% sonstige Monomere III einpolymerisiert enthalten.

Vorzugsweise ist Kapselwand (B) ein Copolymer, das nur aus Monomeren der Gruppen I und II aufgebaut.

Als Monomere I eignen sich C₁-C₂₄-Alkylester der Acryl- und/oder Methacrylsäure (Monomere I a). Weiterhin eignen sich die ungesättigten C₃- und C₄-Carbonsäuren wie Acrylsäure, Methacrylsäure sowie Maleinsäure (Monomere I b). Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Generell werden die betreffenden Methacrylate und Methacrylsäure bevorzugt.

Nach einer bevorzugten Ausführungsform ist Kapselwand (B) ein Copolymer, das aus 25 Gew.-% bis 75 Gew.-% Maleinsäure und/oder Acrylsäure, insbesondere Methacrylsäure, aufgebaut ist.

Geeignete Monomere II sind bi- oder polyfunktionelle Monomere, welche in Wasser nicht löslich oder schwer löslich sind, die aber eine bessere Löslichkeit in der lipophilen Substanz haben. Unter Schwerlöslichkeit in Wasser ist eine Löslichkeit kleiner 60 g/l bei 20°C zu verstehen. Unter bi- oder polyfunktionellen Monomeren versteht man Ver-bindungen, die wenigstens zwei nichtkonjugierte ethylenische Doppelbindungen haben. Vornehmlich kommen Divinyl- und Polyvinylmonomere in Betracht. Sie bewirken eine Vernetzung der Kapselwand während der Polymerisation. Es können ein oder mehrere Divinylmonomere sowie ein oder mehrere Polyvinylmonomere einpolymerisiert werden.

Gemäß einer bevorzugten Ausführungsform wird als Monomer II eine Mischung aus Divinyl- und Polyvinylmonomeren gewählt, wobei der Anteil der Polyvinylmonomeren 2 bis 90 Gew.-% beträgt, bezogen auf die Summe aus Divinyl- und Polyvinylmonomeren. Bevorzugt beträgt der Anteil der Polyvinylmonomeren 5 bis 80 Gew.-%, vorzugsweise 10 bis 60 Gew.-%, bezogen auf die Summe aus Divinyl- und Polyvinylmonomeren. Für Mikrokapseln mit einem mittleren Durchmesser < 2,5 µm beträgt der Polyvinylanteil bevorzugt 20 bis 80 Gew.-%, insbesondere 30 bis 60 Gew.-% bezogen auf die Summe aus Divinyl- und Polyvinylmonomeren. Für Mikrokapseln mit einem mittleren Durchmesser ≥ 2,5 µm beträgt der Polyvinylanteil bevorzugt 5 bis 40 Gew.-%, insbesondere 10 bis 30 Gew.-% bezogen auf die Summe aus Divinyl- und Polyvinylmonomeren.

Geeignete Divinylmonomere sind Divinylbenzol und Divinylcyclohexan. Bevorzugte Divinylmonomere sind die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallylmethacrylamid, Allylacrylat und Allylmethacrylat genannt. Besonders bevorzugt sind Ethandiol-, Propandiol-, Butandiol-, Pentandiol- und Hexandioldiacrylat und die entsprechenden Methacrylate.

Bevorzugte Polyvinylmonomere sind Trivinylbenzol, Trivinylcyclohexan und besonders bevorzugt die Polyester von Polyolen mit Acrylsäure und/oder Methacrylsäure, ferner die Polyallyl- und Polyvinylether dieser Polyole. Ganz besonders bevorzugt werden Trimethylolpropantriacrylat und -methacrylat, Pentaerythrittriallylether, Pentaerythrit-tetraallylether, Pentaerythrittriacrylat und Pentaerythrittetraacrylat sowie ihre technischen Mischungen.

Bevorzugt werden die Kombinationen aus Divinyl- und Polyvinylmonomeren wie aus 1,4-Butandioldiacrylat und Pentaerytrittetraacrylat, 1,6-Hexandioldiacrylat und Pentaerytrittetraacrylat, 1,4-Butandioldiacrylat und Trimethylolpropantriacrylat sowie 1,6-Hexandioldiacrylat und Trimethylolpropantriacrylat.

Als Monomere III kommen sonstige Monomere in Betracht, die von den Monomeren I und II verschieden sind, wie Vinylacetat, Vinylpropionat, Vinylpyridin und Styrol oder α-Methylstyrol. Besonders bevorzugt werden Ladung tragende oder ionisierbare Gruppen tragende Monomere III a, wie Itaconsäure, 2-Hydroxyethyl-acrylat und - methacrylat, Acrylamido-2-methylpropansulfonsäure, Methacrylamid, N-Vinylpyrrolidon, N-Methylolacrylamid, N-Methylolmethacrylamid, N,N-Dimethyl-aminoethylmethacrylat und Diethylaminoethylmethacrylat und weiterhin Maleinsäureanhydrid.

In einer Ausführungsform ist Kapselwand (B) ein Copolymer, das aufgebaut ist aus

| | |
|---|---|
| 30 bis 90 Gew.-% | eines oder mehrerer Monomere I, |
| 10 bis 70 Gew.-% | eines oder mehrerer Monomere II, sowie |
| 0 bis 30 Gew.-% | eines oder mehrerer Monomere III, |

jeweils bezogen auf das Gesamtgewicht der Kapselwand (B).

Besonders bevorzugt ist Kapselwand (B) ein Copolymer, das aufgebaut ist aus

| | |
|---|---|
| 30 bis 90 Gew.-% | einer Mischung aus Monomeren I a und I b, wobei der Anteil der Monomeren I b < 25 Gew.-% ist, |
| 10 bis 70 Gew.-% | einer Mischung aus Divinyl- und Polyvinylmonomeren (Monomere II), wobei der Anteil der Polyvinylmonomere 2 bis 90 Gew.-% beträgt, bezogen auf die Monomere II, sowie |
| 0 bis 30 Gew.-% | sonstige Monomere III, |

jeweils bezogen auf das Gesamtgewicht der Kapselwand (B), wenn nicht ausdrücklich anders angegeben.

In einer anderen besonders bevorzugten Ausführungsform ist Kapselwand (B) ein Copolymer, das aufgebaut ist aus

| | |
|---|---|
| 30 bis 90 Gew.-% | einer Mischung aus Monomeren I a und I b, wobei der Anteil der Monomeren I b ≥ 25 Gew.-% ist, |
| 10 bis 70 Gew.-% | einer Mischung aus Divinyl- und Polyvinylmonomeren (Monomere II), wobei der Anteil der Polyvinylmonomere 2 bis 90 Gew.-% beträgt, bezogen auf die Monomere II, sowie |
| 0 bis 30 Gew.-% | sonstige Monomere III, |

jeweils bezogen auf das Gesamtgewicht der Kapselwand (B), wenn nicht ausdrücklich anders angegeben.

In einer Ausführungsform der vorliegenden Erfindung beträgt das Gewichtsverhältnis von lipophilem Kernmaterial (A) zu Kapselwand (B) im Bereich von 50:50 bis 95:5, bevorzugt von 70:30 bis 93:7.

Erfindungsgemäße Mikrokapseln umfassen weiterhin mindestens einen farbigen oder Farbe gebenden Stoff (C), ausgewählt aus öllöslichen Farbstoffen und öllöslichen Aufhellern, die im Rahmen der vorliegenden Erfindung auch kurz als Farbstoff (C) bzw. Aufheller (C) bezeichnet werden.

### Beispiele für Farbstoffe (C) sind:

| | |
|---|---|
| Fluorol 7GA | Lambdachrome No. 5550 (Lambda Chrom Laser Dyes von Lambda Physik GmbH, Hans-Böckler-Str. 12, Göttingen) |
| Cumarin 47 | CAS Reg. No. 99-44-1 |
| Cumarin 102 | CAS Reg. No. 41267-76-9 |
| Cumarin 6H | CAS Reg. No. 58336-35-9 |
| Cumarin 30 | CAS Reg. No. 41044-12-6 |
| Fluorescein 27 | CAS Reg. No. 76-54-0 |
| Uranin | CAS Reg. No. 518-47-8 |
| Bis-MSB | CAS Reg. No. 13280-61-0 |
| DCM | CAS Reg. No. 51325-91-8 |
| Kresylviolett | CAS Reg. No. 41830-80-2 |
| Phenoxazon 9 | CAS Reg. No. 7385-67-3 |
| HITCI | CAS Reg. No. 19764-96-6 |
| I R 125 | CAS Reg. No. 3599-32-4 |
| I R 144 | CAS Reg. No. 54849-69-3 |
| HDITCI | CAS Reg. No. 23178-67-8 |
| Carbostyryl 7 | Lambdachrome® No. 4220 (Lambda Physik GmbH) |
| Carbostyryl 3 | Lambdachrome No. 4350 (Lambda Physik GmbH) |

Weitere geeignete Farbstoffe (C) sind Perylenfarbstoffe der allgemeinen Formel I 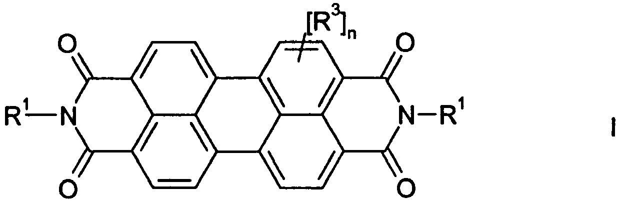 in denen die Variablen wie folgt definiert sind:
R¹ sind verschieden und vorzugsweise gleich und gewählt aus C₅-C₂₀-Alkyl, geradkettig oder verzweigt, in denen ein Kohlenstoffatom durch ein Sauerstoffatom ersetzt sein kann, oder Phenyl, das durch C₁-C₁₃-Alkyl oder C₁-C₁₃-Alkoxy ein- oder mehrfach substituiert sein kann, beispielsweise n-Pentyl, iso-Amyl, n-Hexyl, isoHexyl, n-Heptyl, n-Octyl, n-Nonyl, n-Decyl, iso-Decyl, n-Dodecyl, n-Tetradecyl, n-Pentadecyl, n-Hexadecyl, iso-Hexadecyl, n-Octadecyl, n-Eicosyl, 2-n-Propoxyethyl, 2-Isopropoxyethyl, 2-n-Butoxyethyl, 2- oder 3-Ethoxy-n-propyl, 2- oder 3-n-Propoxy-n-propyl, 2- oder 3-lsopropoxy-n-propyl, 2- oder 3-n-Butoxy-n-propyl, 2- oder 3-Methoxy-n-propyl, 2- oder 4-Methoxybutyl, 2- oder 4-Ethoxybutyl, 2- oder 4-(2-Ethylhexyloxy)butyl, 2-, 3- oder 4-Methylphenyl, 2,3-Dimethylphenyl, 2,4-Dimethylphenyl, 2,5-Dimethylphenyl, 2,6-Dimethylphenyl, 2,4-Diethylphenyl, 2,5-Diethylphenyl, 2,6-Diethylphenyl, 2,4-Diisopropylphenyl, 2,5-Diisopropylphenyl, 2,6-Diisopropylphenyl, 2-, 3- oder 4-Ethylphenyl, 2,6-Diethyl-4-methylphenyl, 2,6-Diethyl-4-methoxyphenyl, 2,5-Diethyl-4-methylphenyl, 2,5-Diethyl-4-methoxyphenyl, 2-n-Hexylphenyl, 2-Ethyl-6-isopropylphenyl, 2-(2-Methylpentyl)-phenyl, 2-Isopropyl-6-isobutylphenyl, 2-Isopropyl-2-sec.-butylphenyl, 2-Ethyl-6-isobutylphenyl, 2-Ethyl-6-sec.-butylphenyl, 2-n-Octylphenyl, 2-Methoxyphenyl, 2-Ethoxyphenyl, 2,3-Dimethoxyphenyl, 2,3-Diethoxyphenyl, 2,4-Dimethoxyphenyl, 2,4-Diethoxyphenyl.

In einer Ausführungsform der vorliegenden Erfindung sind die Reste R¹ jeweils gleich und gewählt aus -CH₂CH₂CH2-O-R², wobei R² gewählt wird aus C₂-C₈-Alkyl.

R³ sind verschieden und insbesondere gleich und gewählt aus Wasserstoff, Chlor, Phenoxy oder aus durch Halogen, C₁-C₄-Alkyl oder C₁-C₄-Alkoxy substituiertes Phenoxy, insbesondere 2-, 3- oder 4-Fluorphenoxy, 2-, 3- oder 4-Chlorphenoxy, 2-, 3- oder 4-Bromphenoxy, 2-, 3- oder 4-tert.-Butylphenoxy, 2-, 3- oder 4-n-Butylphenoxy, 2-, 3-oder 4-lsobutylphenoxy, 2-, 3- oder 4-n-Butoxyphenoxy,2-Isopropyl-4-methylphenoxy, 2,3-, 2,4-, 2,5- oder 2,6-Dichlorphenoxy, 2,4,5- oder 2,4,6-Trichlorphenoxy, 2-, 3- oder 4-Methylphenoxy, 2,3-, 2,4-, 2,5- oder 2,6-Dimethylphenoxy, 2,4,5- oder 2,4,6-Trimethylphenoxy,2-Methyl-4-chlorphenoxy, 2-Isopropylphenoxy, 2-, 3- oder 4-n- oder lsopropoxyphenoxy, 2,4-Dimethoxyphenoxy.

Weitere geeignete Reste sind in EP 0 692 517 A1 auf Seite 5, Zeile 39 ff. offenbart.

n ist eine ganze Zahl und gewählt aus null bis 4.

Bevorzugt sind Perylenfarbstoffe der allgemeinen Formel I a 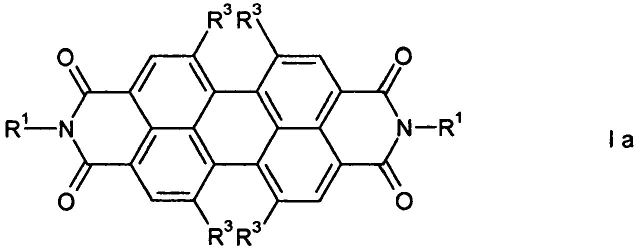 in denen die Variablen wie vorstehend definiert sind.

Viele Perylenfarbstoffe der allgemeinen Formel I sind kommerziell erhältlich unter dem Namen Lumogen® bei der BASF SE. Beispiele sind Lumogen® F - Rot 305, Lumogen® F - Rot 300, Lumogen® F - Gelb 083.

Weitere geeignete Perylenfarbstoffe sind beispielsweise in US 4,618,694, DE 24 51 782 A1, US 4,379,934 und US 4,446,324 beschrieben.

Weitere geeignete Farbstoffe (C) sind öllösliche Azofarbstoffe aus der Sudan-Reihe, beispielsweise Sudan® Rot, insbesondere Sudan® III und Sudan® IV, weiterhin Sudan® Schwarz, Sudan® Gelb (C.I. Solvent Yellow 124)und Sudan® Orange.

Weitere geeignete Beispiele sind Cumarinfarbstoffe nach US 3,880,869, insbesondere solche nach der allgemeinen Formel II 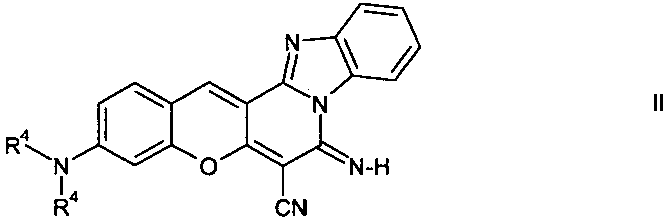 in denen R⁴ verschieden oder vorzugsweise gleich und gewählt aus C₁-C₄-Alkyl, bevorzugt linearem C₁-C₄-Alkyl und insbesondere jeweils Ethyl sind.

Weiterhin sind Cumarinfarbstoffe der allgemeinen Formel III geeignet, 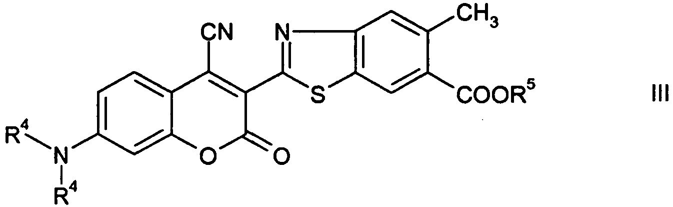 in denen R⁵ gewählt aus C₁-C₁₁-Alkyl ist und R⁴ wie vorstehend definiert ist.

Weitere geeignete öllösliche Farbstoffe finden sich in WO 99/40123.

Geeignete Aufheller, insbesondere optische Aufheller sind im Colour Index aufgeführt, beispielsweise
C.I. Fluorescent Brightener 1, 9, 14, 17, 20, 22, 24, 28, 28:1, 30, 32, 37, 46, 47, 49, 52, 54, 59, 61, 71, 79, 84, 85, 86, 87, 90, 90:1, 91, 104, 113, 114, 117, 119, 121, 123, 124, 130, 132, 134, 135, 136, 140, 144, 145, 146, 147, 148, 152, 153, 154, 162:1, 166, 167, 169, 170, 171, 173, 175, 176, 177, 179, 184, 184:1, 184:2, 185, 185:1, 185:2, 190, 191, 192, 194, 195, 196, 199, 200, 205, 210, 216,217, 217:1, 218, 219, 219:1, 220, 222, 223, 224, 225, 226, 228, 229, 230, 231, 232, 234, 235, 236, 238, 239, 241, 242, 251, 252, 254, 257, 258, 261, 262, 263, 264, 265, 266, 267, 269, 271, 272, 273, 274, 275, 276, 277, 278, 279, 280, 289, 290, 291, 310, 311, 312, 313, 314, 315, 318, 321, 322, 326, 327, 328, 330, 332, 335, 336, 337, 338, 339, 340, 351, 352, 353, 354, 355, 357, 362, 363, 364, 365, 366, 367, 368, 369, 370, 371, 372, 373, 374, 374:1, 375, 376, 377, 378, 379, 380, 381, 382, 383, 384, 385, 386, 387 and 388.

Diejenigen vorstehend genannten Beispiele für optische Aufheller, die in Form von Salzen vorliegen, können sich in öllösliche optische Aufhellerumgewandelt werden, indem man sie umsalzt, beispielsweise indem man kationische optische Aufheller in die Salze der Stearinsäure überführt.

Vorzugsweise sind erfindungsgemäße Mikrokapseln von kugelartiger Gestalt, also kugelförmig.

Erfindungsgemäße Mikrokapseln eignen sich besonders gut, um flächige Substrate auszurüsten.

Ein weiterer Gegenstand der vorliegenden Erfindung ist ein Verfahren zur Herstellung von erfindungsgemäßen Mikrokapseln. Erfindungsgemäße Mikrokapseln kann man vorteilhaft so herstellen, indem man das oder die Monomere, aus dem bzw. denen man Kapselwand (B) herstellen möchte, in Gegenwart von lipophilem Kernmaterial (A) und farbigem oder Farbe gebendem Stoff (C) polymerisiert.

Gegenstand der vorliegenden Erfindung ist ein Verfahren zur Herstellung von Mikro-kapseln, dadurch gekennzeichnet, dass man in Gegenwart von
(A) im Bereich von 50 bis 95 Gewichtsteilen lipophilen Kemmaterials, das einen Phasenübergang fest/flüssig im Temperaturbereich von -20 bis 120°C aufweist,
(C) im Bereich von 0,01 bis 10 Gewichtsteilen mindestens eines farbigen oder Farbe gebenden Stoffs, ausgewählt aus öllöslichen Farbstoffen und öllöslichen Aufhellem,

im Bereich von 4 bis 50 Gewichtsteilen eines Monomers oder eines Gemischs von Monomeren (co)polymerisiert:

| | |
|---|---|
| 30 bis 100 Gew.-% | mindestens eines Monomeren (Monomer I), gewählt aus Acrylsäure, Methacrylsäure, Maleinsäure und C₁-C₂₄-Alkylestem der (Meth)acrylsäure, |
| 0 bis 70 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |

wobei Angaben in Gew.-% bezogen sind auf das Gesamtgewicht der Monomere I, II und III,
und wobei Angaben in Gewichtsteilen auf das Gesamtgewicht der fertigen Mikrokapseln bezogen sind.

Dabei sind Monomere I bis III wie vorstehend definiert.

In einer Ausführungsform des erfindungsgemäßen Herstellverfahrens geht man so vor, dass man die (Co)polymerisationstemperatur oberhalb der Temperatur wählt, bei der lipophiles Kernmaterial (A) seinen Phasenübergang fest/flüssig hat.

Erfindungsgemäße Mikrokapseln lassen sich in einer Ausführungsform durch eine so genannte in-situ-Polymerisation herstellen. Das Prinzip der Mikrokapselbildung basiert dabei darauf, dass man aus dem oder den Monomeren, mindestens einem Radikalstarter, mindestens einem Schutzkolloid und dem einzukapselnden lipophilen Kernmaterial (A) eine stabile Öl-in-Wasser-Emulsion herstellt. Anschließend löst man die Polymerisation der Monomeren durch Erwärmung aus und steuert sie gegebenenfalls durch weitere Temperaturerhöhung, wobei die entstehenden Polymere die Kapselwand bilden, welche die lipophile Substanz umschließt. Dieses allgemeine Prinzip wird beispielsweise in der DE-A-10 139 171 beschrieben.

In vielen Ausführungsformen werden erfindungsgemäße Mikrokapseln in Gegenwart wenigstens eines organischen oder anorganischen Schutzkolloids hergestellt. Sowohl organische wie auch anorganische Schutzkolloide können ionisch oder neutral sein. Schutzkolloide können dabei sowohl einzeln wie auch in Mischungen mehrerer gleich oder unterschiedlich geladener Schutzkolloide eingesetzt werden.

Abhängig vom Herstellungsverfahren und dem dabei gewählten Schutzkolloid kann dieses ebenfalls Bestandteil erfindungsgemäßer Mikrokapseln sein. So können bis zu 10 Gew.-%, bezogen auf das Gesamtgewicht der erfindungsgemäßen Mikrokapseln, Schutzkolloid sein. Gemäß dieser Ausführungsform weisen erfindungsgemäße Mikrokapseln auf der Oberfläche des Polymers Schutzkolloid auf.

Organische Schutzkolloide sind bevorzugt wasserlösliche Polymere, die die Oberflächenspannung des Wassers von 73 mN/m maximal auf 45 bis 70 mN/m senken und somit die Ausbildung geschlossener Kapselwände (B) gewährleisten und dabei erfindungsgemäße Mikrokapseln mit bevorzugten Teilchengrößen im Bereich von 0,5 bis 100 µm, bevorzugt bis 50 µm, besonders bevorzugt 0,5 bis 30 µm und ganz besonders bevorzugt 0,5 bis 10 µm ausbilden. Vorzugsweise handelt es sich bei organischen Schutzkolloiden um organische neutrale, das heißt nicht-ionische, Schutzkolloide.

Gemäß einer weiteren Ausführungsform werden organische neutrale Schutzkolloide bevorzugt. Besonders bevorzugt werden OH-Gruppen tragende Schutzkolloide wie Polyvinylalkohole und teilhydrolysierte Polyvinylacetate.

Organische neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte organische neutrale Schutzkolloide sind Polyvinylalkohol und partiell hydrolysierte Polyvinylacetate sowie Methylhydroxypropylcellulose.

Gemäß einer bevorzugten Ausführungsform werden Mischungen organischer neutraler Schutzkolloide wie Polyvinylalkohole zusammen mit Cellulosederivaten eingesetzt.

Der Einsatz von Polyvinylalkohol und/oder teilhydrolysiertem Polyvinylacetat führt zu stabilen Emulsionen auch bei kleinen mittleren Tröpfchendurchmesser wie 1,5 bis 2,5 µm. Dabei entspricht der Durchmesser der Öltröpfchen nahezu dem Durchmesser der nach der Polymerisation vorliegenden Mikrokapseln.

Im allgemeinen wird Schutzkolloid, insbesondere Polyvinylalkohol oder teilhydrolysiertes Polyvinylacetat, in einer Gesamtmenge von mindestens 3 Gew.-%, vorzugsweise von 6 bis 8 Gew.-% eingesetzt, bezogen auf herzustellende erfindungsgemäße Mikrokapseln (ohne Schutzkolloid). Dabei ist es möglich, weitere oben genannte Schutzkolloide zusätzlich zu der bevorzugten Menge Polyvinylalkohol oder teilhydrolysiertem Polyvinylacetat zuzusetzen.

In einer Ausführungsform stellt man erfindungsgemäße Mikrokapseln nur mit Polyvinylalkohol und/oder teilhydrolysiertem Polyvinylacetat und ohne Zusatz weiterer Schutzkolloide her.

Polyvinylalkohol ist erhältlich durch Polymerisieren von Vinylacetat, gegebenenfalls in Gegenwart von Comonomeren, und Hydrolyse des Polyvinylacetats unter Abspaltung der Acetylgruppen und Bildung von Hydroxylgruppen. Der Hydrolysegrad der Polyvinylacetate kann beispielsweise 1 bis 100 % betragen und liegt bevorzugt in dem Bereich von 50 bis 100 % insbesondere von 65 bis 95 %. Unter teilhydrolysierten Polyvinylacetaten ist im Rahmen dieser Anmeldung ein Hydrolysegrad von < 50% und unter Polyvinylalkohol von ≥ 50 bis 100 % zu verstehen. Die Herstellung von Homo- und Copolymerisaten von Vinylacetat sowie die Hydrolyse dieser Polymerisate unter Bildung von Vinylalkoholeinheiten enthaltenden Polymeren ist an sich bekannt. Vinylalkoholeinheiten enthaltende Polymere werden beispielsweise als Mowiol^{®} Marken von Kuraray Specialities Europe (KSE) vertrieben.

Bevorzugt setzt man Polyvinylalkohole oder teilhydrolysierte Polyvinylacetate ein, deren Viskosität einer 4 Gew.-% wässrigen Lösung bei 20 °C nach DIN 53015 einen Wert im Bereich von 3 bis 56 mPa-s aufweist, bevorzugt einem Wert von 14 bis 45 mPa·s. Bevorzugt setzt man Polyvinylalkohole mit einem Hydrolysegrad von ≥ 65%, bevorzugt ≥ 70% insbesondere ≥ 75% ein.

Organische anionische Schutzkolloide sind Natriumalginat, Polymethacrylsäure und ihre Copolymerisate, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Als anorganische Schutzkolloide sind so genannte Pickering-Systeme zu nennen, die eine Stabilisierung durch sehr feine feste Partikel ermöglichen und in Wasser unlöslich, aber dispergierbar sind oder unlöslich und nicht dispergierbar in Wasser, aber benetzbar von lipophilem Kernmaterial (A) sind. Die Wirkweise und ihr Einsatz ist in EP 1 029 018 A sowie EP 1 321 182 A beschrieben.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxylapatit und Hydrotalcite seien ebenfalls genannt. Besonders bevorzugt sind hochdisperse Kieselsäuren, Magnesiumpyrophosphat und Tricalciumphosphat.

Pickering-Systeme können zuerst in die Wasserphase gegeben werden oder zu der gerührten Öl-in-Wasser-Emulsion zugegeben werden. Manche feine feste Partikel werden durch eine Fällung hergestellt, wie in der EP-A-1 029 018, sowie der EP-A-1 321 182 beschrieben.

Hochdisperse Kieselsäuren können als feine, feste Teilchen in Wasser dispergiert werden. Es ist aber auch möglich, so genannte kolloidale Dispersionen von Kieselsäure in Wasser zu verwenden. Solche kolloidale Dispersionen sind alkalische, wässrige Mischungen von Kieselsäure. Im alkalischen pH-Wert-Bereich sind die KieselsäurePartikel gequollen und in Wasser stabil. Für eine Verwendung dieser Dispersionen als Pickering-System ist es vorteilhaft, wenn der pH-Wert der Öl-in-Wasser-Emulsion mit einer Säure auf einen pH-Wert im Bereich von 2 bis 7 eingestellt wird.

Im allgemeinen wird Schutzkolloid in Mengen von insgesamt 0,1 bis 15 Gew.-%, vorzugsweise von 0,5 bis 10 Gew.-% eingesetzt, bezogen auf die Wasserphase. Für anorganische Schutzkolloide werden dabei bevorzugt Mengen von 0,5 bis 15 Gew.-%, bezogen auf die Wasserphase, gewählt. Organische Schutzkolloide werden bevorzugt in Mengen von 0,1 bis 10 Gew.-% eingesetzt, bezogen auf die Wasserphase der Emulsion.

Gemäß einer Ausführungsform werden anorganische Schutzkolloide sowie ihre Mischungen mit organischen Schutzkolloiden bevorzugt.

Ferner ist es möglich, zur Costabilisierung Tenside, bevorzugt nichtionische Tenside zuzusetzen. Geeignete Tenside sind dem "Handbook of Industrial Surfactants" zu entnehmen, auf dessen Inhalt ausdrücklich Bezug genommen wird. Das oder die Tenside können in einer Menge von 0,01 bis 10 Gew.-%, bezogen auf die Wasserphase der Emulsion, eingesetzt werden.

Als Radikalstarter für die radikalisch ablaufende Polymerisationsreaktion können die üblichen Peroxo- und Azoverbindungen, bevorzugt in Mengen von 0,2 bis 5 Gew.-%, bezogen auf das Gewicht des oder der Monomere, eingesetzt werden.

Je nach Aggregatzustand des Radikalstarters und seinem Löslichkeitsverhalten kann er als solcher, bevorzugt jedoch als Lösung, Emulsion oder Suspension zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper2-ethylhexanoat, Di-tert.-butylperoxid, tert.-Butylhydroperoxid, 2,5-Dimethyl-2,5-di(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100°C auf.

Weiterhin ist es möglich, zur (Co)polymerisation an sich bekannte Regler in üblichen Mengen zuzusetzen, wie tert.-Dodecylmercaptan oder Ethylhexylthioglycolat.

In der Regel führt man die Polymerisation bei Temperaturen im Bereich von 20 bis 122°C und vorzugsweise von 40 bis 95°C durch. Abhängig von eingesetztem lipophilem Kernmaterial (A) ist die Öl-in-Wasser-Emulsion bei einer Temperatur zu bilden, bei der lipophiles Kernmaterial (A) flüssig/ölig ist. Entsprechend wählt man einen Radikalstarter, dessen Zerfallstemperatur oberhalb dieser Temperatur liegt, und führt die Polymerisation 2 bis 50 K oberhalb dieser Temperatur durch, so dass man gegebenenfalls Radikalstarter wählt, deren Zerfallstemperatur oberhalb des Phasenübergangs fest/flüssig des lipophilen Kemmaterials (A) liegt.

Eine Verfahrensvariante, die man beim Einsatz von lipophilem Kernmaterial mit einem Schmelzpunkt bis maximal 60°C bevorzugt wählt, ist, die (Co)polymerisation bei einer Temperatur bei 60°C zu starten und die Temperatur im Verlauf der Reaktion auf 85°C zu erhöhen. Für diese Variante vorteilhafte Radikalstarter haben eine 10-Stunden Halbwertszeit im Bereich von 45 bis 65°C, beispielsweise tert.-Butylperpivalat.

Eine Verfahrensvariante, die man beim Einsatz von lipophilem Kernmaterial mit einem Schmelzpunkt oberhalb von 60°C bevorzugt wählt, ist ein Temperaturprogramm, welches bei entsprechend höheren Reaktionstemperaturen startet. Für Anfangstemperaturen um die 85°C werden Radikalstarter mit einer 10-Stunden Halbwertszeit im Bereich von 70 bis 90°C gewählt, bevorzugt ist tert.-Butylper-2-ethylhexanoat.

Zweckmäßigerweise wird die (Co)polymerisation bei Normaldruck vorgenommen, jedoch kann man auch bei vermindertem oder leicht erhöhtem Druck arbeiten, z. B. bei einer Polymerisationstemperatur oberhalb 100°C, also im Bereich von 0,5 bis 5 bar.

Die Reaktionszeiten der (Co)polymerisation betragen normalerweise 1 bis 10 Stunden, meistens 2 bis 5 Stunden.

Eine vorteilhafte Verfahrensvariante unter Einsatz von Polyvinylalkohol und/oder teilhydrolysiertem Polyvinylacetat ermöglicht eine vorteilhafte Verfahrensweise, gemäß der direkt bei erhöhter Temperatur dispergiert und polymerisiert wird.

Durch das erfindungsgemäße Verfahren erhält man eine wässrige Dispersion von erfindungsgemäßen Mikrokapseln.

Im Anschluss an die eigentliche Polymerisation ist es in der Regel vorteilhaft, die wässrige Dispersion von erfindungsgemäßen Mikrokapseln weitgehend frei von Geruchsträgern, wie Restmonomeren und anderen flüchtigen organischen Bestandteilen zu gestalten. Dies kann physikalisch durch destillative Entfernung (insbesondere über Wasserdampfdestillation) oder durch Abstreifen (Strippen) mit einem inerten Gas erreicht werden. Ferner kann es chemisch geschehen, wie in der WO 99/24525 beschrieben, vorteilhaft durch redoxinitiierte Polymerisation, wie in der DE-A 44 35 423, DE-A 44 19 518 und DE-A 44 35 422 beschrieben.

Man kann auf diese Weise erfindungsgemäße Mikrokapseln mit einem mittleren Teilchendurchmesser im Bereich von 0,5 bis 100 µm herstellen, wobei man die Teilchendurchmesser in an sich bekannter Weise über die Scherkraft, die Rührgeschwindigkeit, Wahl des oder der Schutzkolloide und seine bzw. ihre Konzentration einstellen kann. Bevorzugt werden erfindungsgemäße Mikrokapseln mit einem mittleren Teilchendurchmesser im Bereich von 0,5 bis 50 µm, bevorzugt 0,5 bis 30 µm, insbesondere 3 bis 7 µm (Z-Mittel, bestimmt mittels Lichtstreuung).

Es ist möglich, erfindungsgemäße Mikrokapseln mit Polyelektrolyt zu behandeln, was gegebenenfalls die Dichtigkeit der Kapseln noch verbessern kann. Unter Polyelektrolyten werden im Rahmen der vorliegenden Erfindung Polymere mit ionisierbaren oder ionisch dissoziierbaren Gruppen, die Bestandteil oder Substituent der Polymerkette sein können, verstanden. Üblicherweise ist die Zahl dieser ionisierbaren oder ionisch dissoziierbaren Gruppen im Polyelektrolyten so groß, dass die Polymere in der ionischen Form (auch Polyionen genannt) wasserlöslich sind. Bevorzugt werden Polyelektrolyte, die in Wasser bei 25 °C eine Löslichkeit von ≥ 4 g/l aufweisen, insbesondere Polyelektrolyte mit unbegrenzter Löslichkeit bzw. Quellbarkeit in Wasser. Bevorzugt werden Polyelektrolyte, die eine Elektrolytfunktionalität an jeder Wiederholungseinheit tragen. Im Gegensatz zu Schutzkolloiden haben Polyelektrolyte in der Regel keine oder nur eine gering emulgierende Wirkung, stattdessen aber haben Polyelektrolyte vorwiegend verdickende Wirkung. Im Rahmen der vorliegenden Erfindung können Polyelektrolyte ein mittleres Molekulargewicht Mw von 500 bis 10.000.000 g/mol haben, bevorzugt 1.000 bis 100.000 g/mol, insbesondere 1.000 bis 10.000 g/mol. Es können lineare oder verzweigte Polyelektrolyte eingesetzt werden.

Je nach Art der dissoziierbaren Gruppen unterscheidet man kationische und anionische Polyelektrolyte (auch als Polyion bezeichnet). Betrachtet wird dabei die Ladung des Polyions (ohne Gegenion). Kationische Polyelektrolyte entstehen aus basische Gruppen enthaltenden Polymeren (Polybasen) durch Anlagerung von Protonen oder Quatemierung.

Anionische Polyelektrolyte entstehen aus saure Gruppen enthaltenden Polymeren (Polysäuren) durch Abspaltung von Protonen.

Die Zuordnung des Polyelektrolyten erfolgt dabei nach der resultierenden Gesamtladung des Polyions (d.h. ohne Gegenion). Weist der Polyelektrolyt überwiegend positiv geladene, dissoziierte Gruppen auf, so handelt es sich um einen kationischen Polyelektrolyten. Weist er dagegen überwiegend negativ geladene Gruppen auf, so handelt es sich um einen anionischen Polyelektrolyten.
Bevorzugt werden ein oder mehrere kationische oder ein oder mehrere anionische Polyelektrolyte eingesetzt. Besonders bevorzugt werden ein oder mehrere kationische Polyelektrolyte gewählt. Man nimmt an, dass bei aufeinanderfolgender Zugabe von mehreren unterschiedlich geladenen Polyelektrolyten der Aufbau mehrerer Schichten erfolgt, sofern die Polyelektrolytmenge jeweils für den Aufbau einer Schicht ausreicht. In der Regel führt eine Polyelektrolytmenge von wenigsten 1 Gew.-% Polyelektrolyt bezogen auf das Gesamtgewicht der polyelektrolyttragenden Mikrokapseln zu einer Beschichtung. Bevorzugt wird jedoch nur eine Polyelektrolytschicht aufgebracht. Bei dieser Schicht kann es sich um einen oder eine Mischung mehrerer gleichgeladener Polyelektrolyte handeln.

Anionische Polyelektrolyte sind beispielsweise erhältlich durch radikalische Polymerisation von ethylenisch ungesättigten anionischen Monomeren in wässrigem Medium. Als ethylenisch ungesättigte anionische Monomere kommen beispielsweise monoethylenisch ungesättigte C₃- bis C₅-Carbonsäuren wie Acrylsäure, Methacrylsäure, Ethacrylsäure, Crotonsäure, Maleinsäure, Fumarsäure und Itaconsäure, Sulfonsäuren wie Vinylsulfonsäure, Styrolsulfonsäure und Acrylamidomethylpropansulfonsäure und Phosphonsäuren wie Vinylphosphonsäure, und/oder jeweils die Alkalimetall-, Erdalkalimetall- und/oder Ammoniumsalze dieser Säuren in Betracht.

Zu den bevorzugt eingesetzten, anionischen Monomeren gehören Acrylsäure, Methacrylsäure, Maleinsäure und Acrylamido-2-methylpropansulfonsäure. Besonders bevorzugt sind wässrige Dispersionen von Polymerisaten auf Basis von Acrylsäure. Die anionischen Monomere können entweder allein zu Homopolymerisaten oder auch in Mischung untereinander zu Copolymerisaten polymerisiert werden. Beispiele hierfür sind die Homopolymerisate der Acrylsäure, Homopolymerisate der Methacrylsäure oder Copolymerisate aus Acrylsäure und Maleinsäure, Copolymerisate aus Acrylsäure und Methacrylsäure sowie Copolymerisate aus Methacrylsäure und Maleinsäure.

Die Polymerisation der anionischen Monomeren kann jedoch auch in Gegenwart mindestens eines anderen ethylenisch ungesättigten Monomeren durchgeführt werden. Diese Monomeren können nichtionisch sein oder aber eine kationische Ladung tragen.

Beispiele für nichtionische Comonomere sind Acrylamid, Methacrylamid, N-C₁- bis C₃-Alkylacrylamide, N-Vinylformamid, Acrylsäureester von einwertigen Alkoholen mit 1 bis 20 C-Atomen wie insbesondere Methylacrylat, Ethylacrylat, Isobutylacrylat und n-Butylacrylat, Methacrylsäureester von einwertigen Alkoholen mit 1 bis 20 C-Atomen, z. B. Methylmethacrylat und Ethylmethacrylat, sowie Vinylacetat und Vinylpropionat.

Geeignete kationische Monomere, die mit den anionischen Monomeren copolymerisierbar sind, sind Dialkylaminoethylacrylate, Dialkylaminoethylmethacrylate, Dialkylaminopropylacrylate, Dialkylaminopropylmethacrylate, Dialkylaminoethylacrylamide, Dialkylaminoethylmethacrylamide, Dialkylaminopropylacrylamide, Dialkylaminopropylmethacrylamide, Diallyldimethylammoniumchlorid, Vinylimidazol sowie die jeweils mit Mineralsäuren neutralisierten und/oder quaternierten kationischen Monomere. Einzelne Beispiele für kationische Monomere sind Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dimethyaminoethylacrylamid, Dimethylaminoethylmethacrylamid, Dimethylaminopropylacrylamid, Dimethylaminopropylmethacrylamid, Diethylaminoethylacrylamid und Diethylaminopropylacrylamid.

Die kationischen Monomere können vollständig oder auch nur teilweise neutralisiert bzw. quaterniert sein, z. B. jeweils zu 1 bis 99 %. Bevorzugt eingesetztes Quaternierungsmittel für die kationischen Monomere ist Dimethylsulfat. Man kann die Quatemierung der Monomere jedoch auch mit Diethylsulfat oder mit Alkylhalogeniden wie Methylchlorid, Ethylchlorid oder Benzylchlorid durchführen. Die Comonomere werden bei der Herstellung der anionischen Polyelektrolyte beispielsweise in solchen Mengen eingesetzt, dass die entstehenden Polymerdispersionen beim Verdünnen mit Wasser und bei pH-Werten oberhalb von 7,0 und einer Temperatur von 20°C wasserlöslich sind und eine anionische Ladung aufweisen. Bezogen auf die bei der Polymerisation insgesamt eingesetzten Monomere beträgt die Menge an nichtionischen und/oder kationischen Comonomeren z. B. 0 bis 99, vorzugsweise 5 bis 75 Gew.-% und liegt meistens in dem Bereich von 5 bis 25 Gew.-%. Die kationischen Monomere werden dabei höchstens in einer Menge eingesetzt, dass die entstehenden Polyelektrolyte insgesamt bei pH-Werten < 6,0 und einer Temperatur von 20°C eine anionische Ladung tragen. Die anionische Überschussladung in den entstehenden amphoteren Polymeren beträgt z. B. mindestens 5 Mol-%, vorzugsweise mindestens 10 Mol-%, insbesondere mindestens 30 Mol-%, ganz besonders bevorzugt mindestens 50 Mol-%.

Beispiele für bevorzugte Copolymere sind Copolymerisate aus 25 bis 90 Gew.-% Acrylsäure und 75 bis 10 Gew.-% Acrylamid. Vorzugsweise polymerisiert man mindestens eine ethylenisch ungesättigte C3 bis C5-Carbonsäure in Abwesenheit von anderen monoethylenisch ungesättigten Monomeren. Besonders bevorzugt sind Homopolymerisate von Acrylsäure, die durch radikalische Polymerisation von Acrylsäure in Abwesenheit von anderen Monomeren erhältlich sind.

Als Vernetzer zur Herstellung verzweigter Polyelektrolyte können alle Verbindungen verwendet werden, die über mindestens zwei ethylenisch ungesättigte Doppelbindungen im Molekül verfügen. Solche Verbindungen werden beispielsweise bei der Herstellung vernetzter Polyacrylsäuren wie superabsorbierenden Polymeren eingesetzt, vgl. EP-A 0 858 478, Seite 4, Zeile 30 bis Seite 5, Zeile 43. Beispiele für Vernetzer sind Triallylamin, Pentaerythrittriallylether, Pentaerythrittetraallylether, Methylenbisacrylamid, N,N'-Divinylethylenharnstoff, mindestens zwei Allylgruppen enthaltende Allylether oder mindestens zwei Vinylgruppen aufweisende Vinylether von mehrwertigen Alkoholen wie z. B. Sorbitol, 1,2-Ethandiol, 1,4-Butandiol, Trimethylolpropan, Glycerin, Diethylenglykol und von Zuckern wie Saccharose, Glucose, Mannose, vollständig mit Acrylsäure oder Methacrylsäure veresterte zweiwertige Alkohole mit 2 bis 4 C-Atomen wie Ethylenglykoldimethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylenpropantriacrylate oder ethoxylierte Trimethylenpropantrimethacrylate, 2,2-Bis(hydroxymethyl)butanoltrimethacrylat, Pentaerythrittriacrylat, Pentaerythrittetraacrylat und Triallylmethylammoniumchlorid. Falls bei der Herstellung der erfindungsgemäßen Dispersionen Vernetzer eingesetzt werden, so betragen die jeweils verwendeten Mengen an Vernetzer beispielsweise 0,0005 bis 5,0, vorzugsweise 0,001 bis 1,0 Gew.-%, bezogen auf die bei der Polymerisation insgesamt eingesetzten Monomere. Bevorzugt verwendete Vernetzer sind Pentaerythrittriallylether, Pentaerythrittetraallylether, N,N'-Divinylethylenharnstoff, mindestens zwei Allylgruppen enthaltende Allylether von Zuckern wie Saccharose, Glucose oder Mannose und Triallylamin sowie Mischungen dieser Verbindungen.

Als anionische Polyelektrolyte können weiterhin Polykondensate wie beispielsweise Phenolsulfonsäureharze eingesetzt werden. Geeignet sind Aldehyd-Kondensate, besonders auf Basis von Formaldehyd, Acetaldehyd, Isobutyraldehyd, Propionaldehyd, Glutaraldehyd und Glyoxal, ganz besonders Formaldehyd-Kondensate auf Basis von Phenolsulfonsäuren. Als weitere reagierende Verbindungen können beispielsweise Amine oder Amide, insbesondere solche der Kohlensäure wie beispielsweise Harnstoff, Melamin oder Dicyandiamid zur Herstellung der Phenolsulfonsäureharze mit verwendet werden.

Die Phenolsulfonsäureharze liegen vorzugsweise als Salze vor. Bevorzugt weisen die Kondensationsprodukte einen Kondensationsgrad von 5 bis 100 und ein mittleres Molekulargewicht M_{w} von 500 bis 10 000 g/mol auf. Die Herstellung der Phenolsulfonsäureharze erfolgt vorzugsweise analog der in der EP-A 816 406 angegebenen Weise.

Als kationische Polyelektrolyte kommen beispielsweise Polymere aus der Gruppe der
(a) Vinylimidazoliumeinheiten enthaltende Polymere,
(b) Polydiallyldimethylammoniumhalogenide,
(c) Vinylamineinheiten enthaltende Polymere,
(d) Ethylenimineinheiten enthaltende Polymere,
(e) Dialkylaminoalkylacrylat- und/oder Dialkylaminoalkylmethacrylateinheiten enthaltende Polymere und
(f) Dialkylaminoalkylacrylamid- und/oder Dialkylaminoalkylmethacrylamideinheiten enthaltende Polymere

in Betracht. Solche Polymere sind bekannt und im Handel erhältlich. Die den kationischen Polyelektrolyten der Gruppen (a) bis (f) zugrunde liegenden Monomere können dabei in Form der freien Base, vorzugsweise jedoch in Form ihrer Salze mit Mineralsäuren wie Salzsäure, Schwefelsäure oder Phosphorsäure sowie in quaternierter Form zur Polymerisation eingesetzt werden. Als Quaternierungsmittel kommen beispielsweise Dimethylsulfat, Diethylsulfat, Methylchlorid, Ethylchlorid, Cetylchlorid oder Benzylchlorid in Betracht.

In einer Variante des erfindungsgemäßen Verfahrens kann man erfindungsgemäße Mikrokapseln nach der (Co)polymerisation isolieren, beispielsweise durch Abfiltrieren oder insbesondere durch Sprühtrocknen.

Ein weiterer Gegenstand der vorliegenden Erfindung ist die Verwendung von erfindungsgemäßen Mikrokapseln zur Ausrüstung von flächigen Substraten. Ein weiterer Gegenstand der vorliegenden Erfindung ist ein Verfahren zur Ausrüstung von flächigen Substraten unter Verwendung von erfindungsgemäßen Mikrokapseln. Ein weiterer Gegenstand der vorliegenden Erfindung sind flächige Substrate, aus gerüstet mit erfindungsgemäßen Mikrokapseln.

Erfindungsgemäße flächige Substrate weisen nicht nur ein gutes thermisches Verhalten auf in der Form, dass sich ihre Temperatur, bei der sie Wärme speichern können, sehr gut einstellen lässt. Sie weisen auch eine brillante Farbe mit sehr guter Echtheit auf.

In einer Ausführungsform der vorliegenden Erfindung werden flächige Substrate gewählt aus Baustoffen und faserigen Substraten. Baustoffe sind beispielsweise Zement, Beton, Mörtel, Schaumstoffe wie beispielsweise geschäumtes Polystyrol oder geschäumtes Polyurethan, Klebstoffe für den Baubereich wie beispielsweise Fliesenkleber, weiterhin Kunststoffe, insbesondere technische Kunststoffe wie Styrolcopolymere, Polyvinylchlorid, Polyolefine, Polyester oder Polyamide, beispielsweise als Bauelemente oder in Form von Folien.

Faserige Substrate können beispielsweise sein: Textilien, Papier, Pappe, Kartonagen, Tapeten, insbesondere Raufasertapeten, Holz, Spanplatten, Hartfaserplatten, mineralische Fasern. Wollen, Vliese und Gewebe z.B. aus Glas. Textilien im Sinne der vorliegenden Erfindung können sein: Textilfasern, textile Halb- und Fertigfabrikate und daraus hergestellte Fertigwaren, die neben Textilien für die Bekleidungsindustrie beispielsweise auch Teppiche und andere Heimtextilien, weiterhin auch Matratzen sowie technischen Zwecken dienende textile Gebilde umfassen. Dazu gehören auch ungeformte Gebilde wie beispielsweise Flocken, linienförmige Gebilde wie Bindfäden, Fäden, Garne, Leinen, Schnüre, Seile, Zwirne sowie Körpergebilde wie beispielsweise Filze, Gewebe, Gewirke, Vliesstoffe und Watten. Die Textilien können natürlichen Ursprungs sein, beispielsweise Baumwolle, Wolle oder Flachs, oder synthetisch, beispielsweise Polyamid, Polyester, modifiziertem Polyester, Polyestermischgewebe, Polyamidmischgewebe, Polyacrylnitril, Triacetat, Acetat, Polycarbonat, Polypropylen, Polyvinylchlorid, Polyestermikrofasern und Glasfasergewebe.

Weitere besonders geeignete flächige Substrate sind Leder und insbesondere Kunstleder.

Zur Ausrüstung von Textil mit erfindungsgemäßen Mikrokapseln ist es beispielsweise möglich, erfindungsgemäße Mikrokapseln in die Fasern einzuarbeiten, beispielsweise beim Verspinnen.

In einer anderen Variante ist es möglich, flächiges Substrat mit erfindungsgemäßen Mikrokapseln zu beschichten, imprägnieren, besprühen, bedrucken oder erfindungsgemäße Mikrokapseln durch Pflatschen auf flächiges Substrat aufzubringen.

So ist es in einer anderen Variante möglich, erfindungsgemäße Mikrokapseln in einer Formulierung, insbesondere in eine wässrige Formulierung einzuarbeiten und damit flächiges Substrat zu beschichten. Derartige Formulierungen und insbesondere wässrige Formulierungen sind ebenfalls Gegenstand der vorliegenden Erfindung und werden auch als erfindungsgemäße Mikrokapsel-Formulierungen bezeichnet.

Beispiele für geeignete wässrige Mikrokapsel-Formulierungen sind Druckpasten und Färbeflotten, weiterhin Beschichtungsmittel.

Bevorzugte wässrige Mikrokapsel-Formulierungen enthalten weiterhin ein Bindemittel.

Bindemittel im Sinne der vorliegenden Erfindung sind emulgierte oder dispergierte filmbildende Polymere, die auch Copolymere mit einschließen. Als Bindemittel kann man sowohl Dispersionen, Emulsionen als auch Organisole von (Co)polymeren wie beispielsweise Polyacrylaten, Polyurethanen, Polybutadien, Polyolefinen wie Polyethylen oder Polypropylen und deren Copolymere verwenden. Bevorzugt sind Dispersionen oder Emulsionen von Polyacrylaten oder Polyurethanen.

Geeignete Polyacrylate, die als Bindemittel im Sinne der vorliegenden Erfindung bevorzugt zu nennen sind, sind solche Copolymerisate, insbesondere Emulsionscopolymerisate von mindestens einer einfach ethylenisch ungesättigten Carbonsäure oder Dicarbonsäure wie beispielsweise Maleinsäure, Fumarsäure, Crotonsäure, Itaconsäure oder bevorzugt (Meth)acrylsäure mit mindestens einem Comonomer wie beispielsweise mindestens einem C₁-C₁₀-Alkylester von mindestens einer einfach ethylenisch ungesättigten Carbonsäure oder Dicarbonsäure, insbesondere seien Methyl(meth)acrylat, Ethylacrylat, n-Butylacrylat und 2-Ethylhexylacrylat genannt, und/oder mindestens einem weiteren Comonomer, gewählt aus beispielsweise Vinylaromaten, beispielsweise para-Methylstyrol, α-Methylstyrol und insbesondere Styrol, und stickstoffhaltigen Comonomeren wie (Meth)acrylamid oder (Meth)acrylnitril.

In einer Ausführungsform der vorliegenden Erfindung enthalten Polyacrylate, die als Bindemittel geeignet sind, mindestens ein reaktives Comonomer einpolymerisiert, gewählt aus Glycidyl(meth)acrylat, Acetoacetyl(meth)acrylat und N-Methylol-(meth)acrylamid.

Geeignete Polyurethane, die als Bindemittel im Sinne der vorliegenden Erfindung bevorzugt zu nennen sind, sind hydroxylterminierte Polyurethane, die durch Reaktion von mindestens einem Polyesterol, beispielsweise einem Kondensationsprodukt einer aliphatischen Dicarbonsäure wie Bernsteinsäure, Glutarsäure und insbesondere Adipinsäure mit mindestens einem aliphatischen Diol, beispielsweise 1,6-Hexandiol, 1,4-Butandiol, Neopentylglykol, Ethylenglykol oder Diethylenglykol, und einem Diisocyanat oder Polyisocyanat und gegebenenfalls weiteren Reaktionspartnern hergestellt werden können. Geeignete Diisocyanate sind aliphatische, cycloaliphatische und aromatische Diisocyanate, insbesondere Hexamethylendiisocyanat (HDI), Dodecamethylendiisocyanat, 4,4'-Diisocyanatocylohexylmethan (MDI), Cyclohexan-1,4-diisocyanat, Isophorondiisocyanat (IPDI) und aromatische Diisocyanate wie beispielsweise Toluylendiisocyanat (TDI).

Als weitere Reaktionspartner seien beispielsweise Diole, insbesondere 1,4-Butandiol, und Säuregruppenhaltige Moleküle, insbesondere Säuregruppenhaltige Diole und Säuregruppenhaltige Diamine genannt, z. B. 3,3-Dihydroxymethylolpropionsäure und die Verbindung der Formel IV.

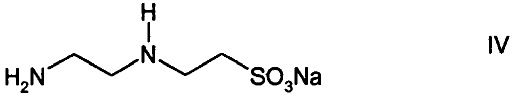

In einer Ausführungsform der vorliegenden Erfindung handelt es sich bei erfindungsgemäßen Druckpasten um solche, die mindestens ein nichtionisches Tensid enthalten. Geeignete nichtionische Tenside sind z.B. ethoxylierte Mono-, Di- und Tri-C₄-C₁₂-Alkylphenole (Ethoxylierungsgrad: 3 bis 50) sowie ethoxylierte C₈-C₃₆-Fettalkohole (Ethoxylierungsgrad: 3 bis 80). Gebräuchliche nichtionische Tenside sind kommerziell erhältlich beispielsweise als Lutensol®-Marken der BASF SE.

Erfindungsgemäße Druckpasten sind vorzugsweise wässrige Zubereitungen, die eine viskose Konsistenz haben. Die dynamische Viskosität von erfindungsgemäßen Druckpasten kann beispielsweise bei 20°C im Bereich von 50 bis 150 dPa·s liegen, bevorzugt 60 bis 100 dPa·s, in einer anderen Ausführungsform im Bereich von 10 bis 55 dPa·s, bestimmt beispielsweise nach DIN iso 2555.
Erfindungsgemäße wässrige Mikrokapsel-Formulierungen, insbesondere Beschichtungsmittel oder Druckpasten, können einen oder mehrere Verdicker (Verdickungsmittel) enthalten. Beispiele für geeignete Verdickungsmittel sind vorstehend genannt. Weitere Beispiele für geeignete Verdickungsmittel sind wasserlösliche Polymerisate von ethylenisch ungesättigten Monomeren, wie sie in WO 05/12378 beschrieben sind.

In einer Ausführungsform der vorliegenden Erfindung enthalten erfindungsgemäße wässrige Mikrokapsel-Formulierungen, insbesondere Druckpasten ein oder mehrere nichtionische Tenside. Beispiele für geeignete nichtionische Tenside sind vorstehend genannt.

In einer Ausführungsform der vorliegenden Erfindung sind erfindungsgemäße wässrige Mikrokapsel-Formulierungen und insbesondere erfindungsgemäße Druckpasten frei von Alkylestern von Dicarbonsäuren.

Erfindungsgemäße wässrige Mikrokapsel-Formulierungen, insbesondere erfindungsgemäße Druckpasten können neben vorstehend genannten Bestandteilen ein oder mehrere Zusätze enthalten, beispielsweise Echtheitsverbesserer, Griffverbesserer, Entschäumer, Netzmittel, Egalisiermittel, Wasserenthärter wie beispielsweise Komplexbildner, Fixierer (Fixiermittel), Emulgatoren, Wasserrückhaltemittel wie beispielsweise Glycerin oder Harnstoff, Wirkstoffe wie beispielsweise Biozide oder Flammfestmittel.

Geeignete Echtheitsverbesserer sind beispielsweise bei Raumtemperatur flüssige Silikonöle und Polysiloxane. In einer bevorzugten Variante der vorliegenden Erfindung kann man auf den Einsatz von Echtheitsverbesserern verzichten.

Geeignete Entschäumer sind beispielsweise silikonhaltige Entschäumer wie beispielsweise solche der Formel HO-(CH₂)₃-Si(CH₃)[OSi(CH₃)₃]₂, nicht alkoxyliert oder mit bis zu 20 Äquivalenten Alkylenoxid und insbesondere Ethylenoxid alkoxyliert. Auch Silikonfreie Entschäumer sind geeignet wie beispielsweise mehrfach alkoxylierte Alkohole, z.B. Fettalkoholalkoxylate, bevorzugt 2 bis 50-fach ethoxylierte vorzugsweise unverzweigte C₁₀-C₂₀-Alkanole, unverzweigte C₁₀-C₂₀-Alkanole und 2-Ethylhexan-1-ol. Weitere geeignete Entschäumer sind Fettsäure-C₈-C₂₀-alkylester, bevorzugt StearinsäureC₁₀-C₂₀-alkylester, bei denen C₈-C₂₀-Alkyl, bevorzugt C₁₀-C₂₀-Alkyl unverzweigt oder verzweigt sein kann.

Geeignete Netzmittel sind beispielsweise nichtionische, anionische oder kationische Tenside, insbesondere Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate oder Alkylphenylphosphate.

Geeignete Egalisiermittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol. Ganz besonders bevorzugt sind Blockcopolymerisate aus Propylenoxid/Ethylenoxid beispielsweise der Formel EO₈PO₇EO₈, wobei EO für Ethylenoxid und PO für Propylenoxid steht.

Geeignete Komplexbildner sind beispielsweise das Tetranatriumsalz der Ethylendiamintetraessigsäure und das Trinatriumsalz der Nitrilotriessigsäure, weiterhin Phosphonate, Phosphate und Polyphosphate von Alkalimetallen.

Beispiele für geeignete Fixierer sind Melaminderivate, die alkoxyliert, alkoxyalkyliert oder zu Halbaminalen umgesetzt sein können, hydrophilierte Isocyanurate, Polyglycidylether mit 2 bis 5 Glycidylgruppen pro Molekül, Carbodiimide, Harnstoff oder Hamstoffderivate, die gegebenenfalls zu Halbaminalen oder Aminalen umgesetzt sein können.

Ganz besonders bevorzugte Fixierer sind Carbodiimide, insbesondere polymere Carbodiimide. Beispiele für polymere Carbodiimide sind erhältlich durch Kondensation bzw. Polykondensation von mindestens einem aromatischen Diisocyanat, beispielsweise 2,4-Toluylendiisocyanat, 4,4'-Diphenylmethandiisocyanat oder 1,7-Naphthylendiisocyanat oder mindestens einem aliphatischen oder cycloaliphatischen Carbodiimid wie beispielsweise Isophorondiisocyanat, Trimethylendiisocyanat, Tetramethylendiisocyanat, Hexamethylendiisocyanat, Dodecamethylendiisocyanat, Cyclohexan-1,4-diisocyanat, 2,4-Hexahydrotoluylendiisocyanat, 2,6-Hexahydrotoluylendiisocyanat und 4,4'-Dicyclohexylmethandiisocyanat.

Bevorzugte polymere Carbodiimide sind Copolycarbodiimide, erhältlich durch Kondensation bzw. Polykondensation von mindestens einem aromatischen Diisocyanat, beispielsweise 2,4-Toluylendiisocyanat, 4,4'-Diphenylmethandiisocyanat oder 1,7-Naphthylendiisocyanat, mit mindestens einem aliphatischen oder cycloaliphatischen Carbodiimid wie beispielsweise Isophorondiisocyanat, Trimethylendiisocyanat, Tetramethylendiisocyanat, Hexamethylendiisocyanat, Dodecamethylendiisocyanat, Cyclohexan-1,4-diisocyanat, 2,4-Hexahydrotoluylendiisocyanat, 2,6-Hexahydrotoluylendiisocyanat und 4,4'-Dicyclohexylmethandiisocyanat.

Ganz besonders bevorzugt sind polymere Carbodiimide, erhältlich durch Polykondensation von m-TMXDI oder p-TMXDI 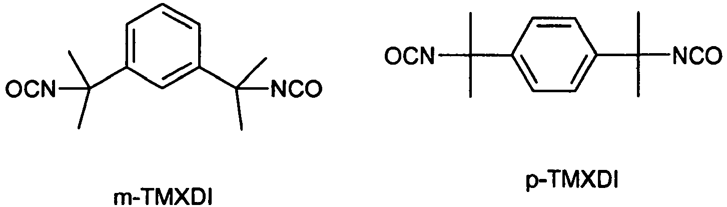 oder Mischungen von m-TMXDI und p-TMXDI mit 2 bis 20, bevorzugt bis 15 und besonders bevorzugt bis 10 -N=C=N-Gruppen pro Mol.

Die vorstehend genannten polymeren Carbodiimide wirken besonders gut in Kombination mit einem oder mehreren Diolen, beispielsweise Ethylenglykol, Diethylenglykol, Triethylenglykol, Tetraethylenglykol, 1,3-Propandiol, 1,4-Butandiol, Propylenglykol, Dipropylenglykol, Tripropylenglykol, Tetrapropylenglykol, Butylenglykol, 1,6-Hexandiol, 1,5-Pentandiol, Polyethylengykol mit einem mittleren Molekulargewicht Mₙ im Bereich von 200 bis 5.000 glmol, Polypropylenglykol mit einem mittleren Molekulargewicht Mₙ im Bereich von 200 bis 5.000 g/mol, Polytetrahydrofuran mit einem Molekulargewicht Mₙ im Bereich von 200 bis 5.000 g/mol, Ethylenoxid-Propylenoxid-Copolymere, insbesondere Blockcopolymere von Ethylenoxid und Propylenoxid.

Geeignete sind weiterhin aromatische Diole wie beispielsweise Resorcin, Hydrochinon, 4,4'-Diphenyldiol, Hydrochinon-di-(para-hydroxybenzoesäureester), Bisphenol A sowie Alkoxylierungsprodukte, insbesondere Ethoxylierungsprodukte und Propoxylierungsprodukte der vorstehend genannten aromatischen Diole, wie beispielsweise Verbindungen der allgemeinen Formel V 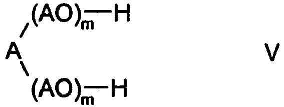 wobei die Variablen wie folgt definiert sind:
- A: ist ein divalenter organischer Rest mit einem bis 40 C-Atomen, bevorzugt 2 bis 30 C-Atomen, vorzugsweise ein organisches Diol, insbesondere ein organischer Rest mit mindestens einem, bevorzugt mindestens zwei Phenylringen, die substituiert sein können, beispielsweise para-O-C₆H₄-O-, para,para'-O-C₆H₄-C₆H₄-O-, para,para'-O-C₆H₄-C(CH₃)₂-C₆H₄-O-,
- AO: wird gewählt aus C₂-C₄-Alkylenoxid, beispielsweise Butylenoxid, insbesondere Ethylenoxid CH₂CH₂O ("EO") und Propylenoxid CH₂C(CH₃)O ("PO")
- m: verschieden oder vorzugsweise gleich und gewählt aus Zahlen im Bereich von null bis 50, bevorzugt 2 bis 20 und besonders bevorzugt 3 bis 15.

Bevorzugt sind Verbindungen der Formel V a

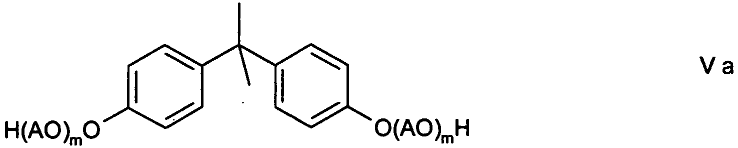

Erfindungsgemäße Druckpasten können einen oder mehrere Emulgatoren enthalten. Geeignete Emulgatoren sind bevorzugt nicht-ionisch. Beispiele für nicht-ionische Emulgatoren sind beispielsweise ein- oder mehrfach alkoxylierte, bevorzugt propoxylierte und insbesondere mehrfach, z. B. 3 bis 100-fach ethoxylierte Fettalkohole, Oxoalkohole und insbesondere Arylpolyglykolether, beispielsweise der Formel VI a bis VI c:

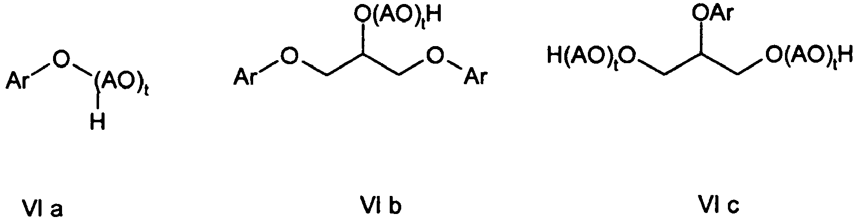

Dabei sind die Variablen wie folgt definiert:
- Ar:: verschieden oder gegebenenfalls gleich, C₆-C₁₄-Aryl, beispielsweise Phenyl, Naphthyl oder Phenanthryl, unsubstituiert oder ein- oder mehrfach substituiert, insbesondere mit C₁-C₄-Alkyl, verzweigt oder unverzweigt, beispielsweise Methyl, Ethyl, n-Propyl, Iso-Propyl, n-Butyl, Iso-Butyl, oder mit Alkylaryl, beispielsweise Styryl; bevorzugte substituierte Phenylreste sind jeweils in 2,6-Position oder in 2,4,6-Position mit C₁-C₄-Alkyl substituiert.
- t: verschieden oder vorzugsweise gleich und gewählt aus Zahlen im Bereich von 1 bis 100, bevorzugt 2 bis 50 und besonders bevorzugt 3 bis 20.

In einer Ausführungsform der vorliegenden Erfindung enthalten erfindungsgemäße wässrige Mikrokapsel-Formulierungen, insbesondere erfindungsgemäße Druckpasten 0,01 bis 45 Gew.-%, bevorzugt 0,11 bis 30 Gew.-%, besonders bevorzugt 0,5 bis 20 Gew.-% erfindungsgemäße Mikrokapseln.

In einer speziellen Ausführungsform der vorliegenden Erfindung enthalten erfindungsgemäße Druckpasten
0,01 bis 45 Gew.-%, bevorzugt 0,11 bis 30 Gew.-%, besonders bevorzugt 0,5 bis 20 Gew.-% erfindungsgemäße Mikrokapseln,
bis 10 Gew.-%, bevorzugt 0,001 bis 8 Gew.-% Verdickungsmittel,
1 bis 30 Gew.-% bevorzugt 2 bis 20 Gew.-% Bindemittel und
insgesamt 0,1 bis 6 Gew.-%, bevorzugt 0,5 bis 3 Gew.-% an weiteren Zusätzen, wobei Angaben in Gew.-% jeweils auf die gesamte erfindungsgemäßer Druckpaste bezogen sind. Der Rest ist vorzugsweise Wasser.

In einer Ausführungsform der vorliegenden Erfindung weisen erfindungsgemäße wässrige Mikrokapsel-Formulierungen, insbesondere erfindungsgemäße Druckpasten einen Feststoffgehalt im Bereich von 3 bis 50 Gew.-%, bevorzugt von 5 bis 40 Gew.-% auf.

In einer Ausführungsform der vorliegenden Erfindung weisen erfindungsgemäße wässrige Mikrokapsel-Formulierungen, insbesondere erfindungsgemäße Druckpasten einen pH-Wert im Bereich von 7 bis 11, bevorzugt bis 9 auf.

Erfindungsgemäße Druckpasten eignen sich zum Bedrucken von verschiedensten Substraten, beispielsweise Holz, Papier, Polymerfolien, beispielsweise aus Polyethylen oder Polyester, weiterhin Leder, Kunstleder, Pappe und Kartonagen und insbesondere Textil.

In einer bevorzugten Ausführungsform der vorliegenden Erfindung handelt es sich bei erfindungsgemäßen Druckpasten um Druckpasten für den Textildruck. Der Begriff Textil ist vorstehend definiert. Vorzugsweise handelt es sich bei Textil im Sinne der vorliegenden Erfindung um flächig ausgestaltetes Textil, vorstehend auch flächiges Textil genannt.

Setzt man erfindungsgemäße Druckpasten zum Bedrucken von Substraten, insbesondere von Textil ein, so erhält man fleckenfrei bedruckte Substrate mit vorzüglichem Griff und guten Echtheiten, beispielsweise Reibechten.

Ein weiterer Gegenstand der vorliegenden Erfindung sind Kombinationen von mehreren, beispielsweise mindestens zwei erfindungsgemäßen Druckpasten, die vorzugsweise je eine Art erfindungsgemäße Mikrokapseln mit unterschiedlicher farbiger oder Farbe gebendem Stoff (C) enthalten. Mit erfindungsgemäßen Kombinationen von erfindungsgemäßen Druckpasten lassen sich beispielsweise mehrfarbige Drucke anfertigen.

Ein weiterer Gegenstand der vorliegenden Erfindung ist ein Verfahren zum Behandeln von Substraten, insbesondere von Textil, unter Verwendung von mindestens einer erfindungsgemäßen wässrigen Mikrokapsel-Formulierungen, im Folgenden auch erfindungsgemäßes Behandlungsverfahren genannt. Einzelheiten zur Durchführung von Ausführungsformen des erfindungsgemäßen Behandlungsverfahrens sind vorstehend genannt.

Ein weiterer Gegenstand ist ein Verfahren zum Bedrucken von Substraten, insbesondere von Textil, unter Verwendung von mindestens einer erfindungsgemäßen Druckpaste. Das erfindungsgemäße Verfahren zum Bedrucken von Substraten wird im Folgenden auch erfindungsgemäßes Druckverfahren genannt.

Zum Zweck des Bedruckens kann man sich an sich bekannter Verfahren bedienen, beispielsweise eines Siebdruckverfahrens.

Eine Ausführungsform des erfindungsgemäßen Druckverfahrens wird im Folgenden beschrieben.

Das erfindungsgemäße Druckverfahren geht aus von Substrat, das unvorbehandelt oder nach an sich bekannten Methoden vorbehandelt sein kann. Beispielsweise können Substrate aus Baumwolle vorbehandelt, insbesondere gebleicht sein.

Danach verdruckt man erfindungsgemäße Druckpaste, beispielsweise mit Hilfe einer Schablone. Man kann großflächig verdrucken oder Substrat mit einem Muster oder mehreren Mustern bedrucken. Vorzugsweise bedruckt man großflächig.

In einer Ausführungsform der vorliegenden Erfindung behandelt man nach dem eigentlichen Bedrucken von Substrat mit erfindungsgemäßer Druckpaste thermisch, und zwar in einem oder mehreren Behandlungsschritten. Beispielsweise kann man thermisch trocknen und/oder thermisch fixieren, bevorzugt trocknet man bei Temperaturen von 70 bis 120°C über einen Zeitraum von 30 Sekunden bis 30 Minuten und/oder fixiert, gegebenenfalls anschließend an das Trocknen, bei Temperaturen von 140°C bis 200°C über einen Zeitraum von 30 Sekunden bis 15 Minuten. Dauer und Temperatur der thermischen Behandlung werden dabei jeweils an das bedruckte Substrat angepasst. Als Temperaturen sind vorstehend jeweils die Temperaturen des Heizmittels, beispielsweise des Umluftstroms, genannt.

Nach der thermischen Behandlung kann man noch waschen oder bügeln.

Man erhält bedruckte Substrate, die gute thermoregulierende Eigenschaften, einen angenehmen Griff und gute Echtheiten wie beispielsweise Reibechtheiten aufweisen und die ebenfalls Gegenstand der vorliegenden Erfindung sind. Vorzugsweise handelt es sich bei erfindungsgemäßen bedruckten Substraten um bedrucktes Textil. Beispielsweise lassen sich erfindungsgemäße Textilien hervorragend im Bekleidungsbereich und als Fahnen oder Wimpel einsetzen, weiterhin als Dekostoffe im Heimtextilbereich oder im Bereich technischer Textilien.

Ein weiterer Gegenstand der vorliegenden Erfindung ist ein Verfahren zur Herstellung von erfindungsgemäßen wässrigen Mikrokapsel-Formulierungen, insbesondere erfindungsgemäße Druckpasten, im Rahmen der vorliegenden Erfindung auch als erfindungsgemäßes Herstellverfahren bezeichnet. Das erfindungsgemäße Herstellverfahren gelingt durch Vermischen, insbesondere Verrühren von
erfindungsgemäßen Mikrokapseln,
mindestens einem Bindemittel,
gegebenenfalls mit Verdickungsmittel und gegebenenfalls mit mindestens einem Zusatz
und gegebenenfalls Auffüllen mit Wasser.

Die Reihenfolge der Zugabe der vorstehend genannten Bestandteile von erfindungsgemäßen Druckpasten kann man frei wählen. Wünscht man ein oder mehrere Verdickungsmittel einzusetzen, so ist es bevorzugt, das oder die Verdickungsmittel als letztes oder unmittelbar vor dem Auffüllen mit Wasser zuzugeben.

Das erfindungsgemäße Herstellverfahren kann man in beliebigen Gefäßen durchführen, beispielsweise in Rührgefäßen.

Wünscht man ein oder mehrere Verdickungsmittel einzusetzen, so ist es bevorzugt, mit Hilfe eines Schnellrührers, beispielsweise eines Ultra-Thurrax, zu vermischen.

Die Erfindung wird durch Arbeitsbeispiele erläutert.
Allgemeine Vorbemerkung: alle Angaben in % sind Gew.-%, wenn nicht ausdrücklich anders angegeben.

### I Herstellung von erfindungsgemäßen Mikrokapseln

### I.1 Herstellung von erfindungsgemäßen Mikrokapseln MK.1

Man stellte eine Wasser- und eine Ölphase her.

### Wasserphase:

| | |
|---|---|
| 381 g | Wasser |
| 190 g | einer 5 Gew.-% wässrigen Lösung von Methylhydroxypropylcellulose (kommerziell erhältlich als Culminal® MHPC 100) |
| 47,5 g | einer 10 Gew.-% wässrigen Polyvinylalkohol-Lösung (Hydrolysegrad: 79 mol-%), kommerziell erhältlich als Mowiol® 15-79 |
| 2,1 g | einer 2,5 gew.-%igen wässrigen Natriumnitrit-Lösung |

### Ölphase

| | |
|---|---|
| 431 g | n-Octadecan (A.1) |
| 9 g | eines technischen Paraffins mit Schmelzpunkt von 65 °C (A.2) |
| 19,6 g | Methylmethacrylat (Monomer I.1) |
| 19,6 g | 1,4-Butandiolacrylat (Monomer II.1) |
| 9,8 g | Methacrylsäure (Monomer I.2) |
| 4,4 g | öllöslicher Farbstoff der Formel I.1 |

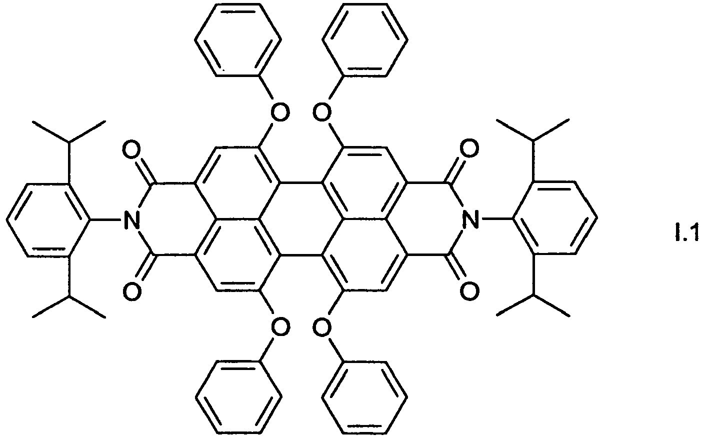

| | |
|---|---|
| 0,7 g | 75% Lösung von tert.-Butylperpivalat in aliphatischen Kohlenwasserstoffen |

### Zulauf 1.1:

| | |
|---|---|
| 5,38 g | einer 10 Gew.-% wässrigen tert.-Butylhydroperoxidlösung |

### Zulauf 1.2:

| | |
|---|---|
| 28,3 g | einer 1 Gew.-% wässrigen Ascorbinsäure-Lösung |

Bei Raumtemperatur wurde die obige Wasserphase vorgelegt. Nach Zugabe der Ölphase wurde mit einem Dissolverrührer bei 3500 Upm (Umdrehungen pro Minute) dispergiert. Nach 40 Minuten Dispergierung wurde eine stabile Emulsion mit einem Tröpfchendurchmesser im Bereich von 2 bis 12 µm erhalten. Die so erhaltene Emulsion wurde unter Rühren mit einem Ankerrührer innerhalb von 60 Minuten auf 70 °C, innerhalb von weiteren 60 Minuten auf 85 °C aufgeheizt und für eine Stunde bei 85 °C gerührt. Es bildete sich eine Mikrokapseldispersion. Zu der entstandenen Mikrokapseldispersion wurde innerhalb von 5 Minuten unter Rühren Zulauf 1.1 dazugegeben. Danach wurde Zulauf 1.2 unter Rühren über einen Zeitraum von 90 Minuten dosiert, während auf Raumtemperatur abgekühlt wurde. Dann wurde mit wässriger NaOH-Lösung neutralisiert. Die entstandene Dispersion von erfindungsgemäßen Mikrokapseln MK.1 besaß einen Feststoffgehalt von 43,9 % und einen mittleren Teilchendurchmesser von 5,1 µm (gemessen mit Fraunhoferbeugung, Volumenmittelwert).

### I.2 Herstellung von erfindungsgemäßen Mikrokapseln MK.2

Man stellte eine Wasser- und eine Ölphase her.

### Wasserphase:

| | |
|---|---|
| 381 g | Wasser |
| 190 g | einer 5 Gew.-% wässrigen Lösung von Methylhydroxypropylcellulose (kommerziell erhältlich als Culminal® MHPC 100) |
| 47,5 g | einer 10 gew.-% wässrigen Polyvinylalkohol-Lösung (Hydrolysegrad: 79 mol-%), kommerziell erhältlich als Mowiol® 15-79 |
| 2,1 g | einer 2,5 Gew.-% wässrigen Natriumnitrit-Lösung |

### Ölphase

| | |
|---|---|
| 431 g | n-Octadecan (A.1) |
| 9 g | eines technischen Paraffins mit einem Schmelzpunkt von 65 °C (A.2) |
| 19,6 g | Methylmethacrylat (Monomer I.1) |
| 19,6 g | 1,4-Butandiolacrylat (Monomer II.1) |
| 9,8 g | Methacrylsäure (Monomer I.2) |
| 4,4 g | des öllöslichen schwarzen Farbstoffes (C.2) |

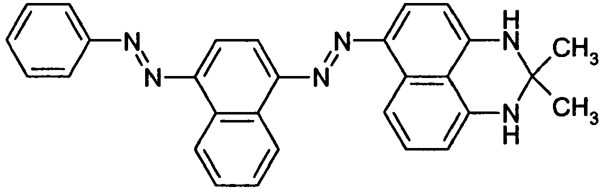

| | |
|---|---|
| 0,7 g | 75 Gew.-% Lösung von t-Butylperpivalat in aliphatischen Kohlenwasserstoffen |

### Zulauf 2.1:

| | |
|---|---|
| 5,38 g | einer 10 Gew.-% wässrigen t-Butylhydroperoxidlösung |

### Zulauf 2.2:

| | |
|---|---|
| 28,3 g | einer 1 Gew.-% wässrigen Ascorbinsäure-Lösung |

Bei Raumtemperatur wurde die Wasserphase vorgelegt. Nach Zugabe der Ölphase wurde mit einem Dissolverrührer bei 3500 Upm dispergiert. Nach 40 Minuten Dispergierung wurde eine stabile Emulsion mit einem Tröpfchendurchmesser im Bereich von 2 bis 12 µm erhalten. Die so erhaltene Emulsion wurde unter Rühren mit einem Anker rührer innerhalb von 60 Minuten auf 70 °C, innerhalb von weiteren 60 Minuten auf 85 °C aufgeheizt und für eine Stunde bei 85 °C gerührt. Es bildete sich eine Mikrokapseldispersion. Zu der entstandenen Mikrokapseldispersion wurde unter Rühren innerhalb von 5 Minuten Zulauf 2.1 dazugegeben. Zulauf 2.2 wurde unter Rühren über einen Zeitraum von 90 Minuten dosiert, während auf Raumtemperatur abgekühlt wurde. Dann wurde mit wässriger NaOH-Lösung neutralisiert. Die entstandene Mikrokapseldispersion besaß einen Feststoffgehalt von 43,4 % und eine mittlere Teilchengröße von 3,6 µm (gemessen mit Fraunhoferbeugung, Volumenmittelwert).

### II. Herstellen einer Druckpaste

Man verwendete folgende Zusätze und Bindemittel:
(Zusatz 1) Copolymer aus Acrylsäure (92 Gew.-%), Acrylamid (7,6 Gew.-%), Methylenbisacrylamid (0,4 Gew.-%), quantitativ neutralisiert mit Ammoniak (25 Gew.-% in Wasser), Molekulargewicht M_{w} von ca. 150.000g/mol 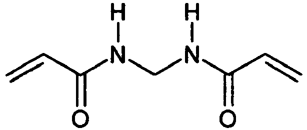
(Zusatz 2): 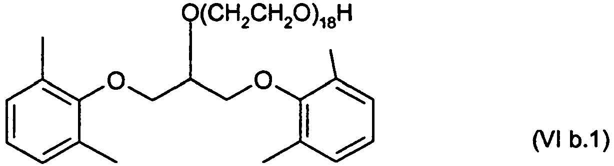
(Zusatz 3): C₁₄-C₁₈-Fettsäurealkoxylat

Bindemittel 1: Copolymerdispersion, pH-Wert 6,8, Feststoffgehalt 40 %, eines statistischen Emulsionscopolymerisats von
1 Gew.-Teil N-Methylolacrylamid, 1 Gew.-Teil Acrylsäure, 4 Gew.-Teilen Acrylamid, 26 Gew.-Teilen Styrol, 68 Gew.-Teilen n-Butylacrylat, Angaben in Gew.-Teilen sind bei den Bindemitteln jeweils bezogen auf gesamten Feststoff, mittlerer Partikeldurchmesser (Gewichtsmittel) 172 nm, bestimmt durch Coulter Counter.

Man verrührte in einem Rührgefäß die folgenden Ingredienzien.
500 g Bindemittel 1 (tell quelle),
20 g Emulsion von 25 Gew.-% Zusatz 1 in Wasser/Weißöl (40:60 Vol.-%),
2 g Zusatz 2,
1 g Zusatz 3, und
400 g Dispersion von erfindungsgemäßen Mikrokapseln MK.1 oder
400 g Dispersion von erfindungsgemäßen Mikrokapseln MK.2 gemäß Beispiel I.

Man füllte mit Wasser auf einen Liter auf und verrührte danach 15 Minuten mit einem Schnellrührer des Typs Ultra-Turrax mit etwa 2000 Umdrehungen/min. Man erhielt glatt aussehende, zügige, agglomeratfreie Druckpasten.

### Drucksubstrat:

Baumwollgewebe, gebleicht, nicht merzerisiert, Flächengewicht 196 g/m² ("BW").
Drucken: Rakel 8 mm, Magnetzugstufe 6, Schablonengaze E 55
Thermische Behandlung: 2 Schritte, 1. Schritt: Trocknen: bei 90° C über 10 Minuten im Trockenschrank

Der anschließende 2. Schritt der thermischen Behandlung (Vernetzung) erfolgte jeweils auf einem Spannrahmen mit Heißluft durch fünfminütiges Erhitzen auf 150 °C.

Man erhielt ein brillant farbiges bzw. schwarzes Textil, welches ausgezeichnete Wärmespeicherfähigkeit mit hervorragenden Echtheiten (Reibechtheit, Waschechtheit) verband.

## Patentansprüche

1. Mikrokapseln, umfassend
(A) im Bereich von 50 bis 95 Gewichtsteilen lipophiles Kernmaterial, das einen Phasenübergang fest/flüssig im Temperaturbereich von -20 bis 120°C aufweist,
(B) im Bereich von 4 bis 50 Gewichtsteilen Kapselwand, und
(C) im Bereich von 0,01 bis 10 Gewichtsteilen mindestens einen farbigen oder Farbe gebenden Stoff, ausgewählt aus öllöslichen Farbstoffen und öllöslichen Aufhellern,
wobei Angaben in Gewichtsteilen auf das Gesamtgewicht der betreffenden Mikrokapseln bezogen sind,
wobei die Kapselwand (B) ein (Co)polymer ist, das aufgebaut ist aus
| | |
|---|---|
| 30 bis 100 Gew.-% | mindestens eines Monomeren (Monomer I), gewählt aus Acrylsäure, Methacrylsäure, Maleinsäure und C₁-C₂₄-Alkylester der (Meth)acrylsäure, |
| 0 bis 70 Gew.-% | eines oder mehrerer bi- oder polyfunktioneller Monomere (Monomere II), welche(s) in Wasser nicht löslich oder schwer löslich ist bzw. sind und |
| 0 bis 40 Gew.-% | eines oder mehrerer sonstiger Monomere (Monomere III), |
wobei. Angaben in Gew.-% auf Gesamtgewicht der Kapselwand (B) bezogen sind.

2. Mikrokapseln nach Anspruch 1, **dadurch gekennzeichnet, dass** sie einen mittleren Durchmesser im Bereich von 0,5 bis 100 µm (Z-Mittel) aufweisen, bestimmt durch Lichtstreuung.

3. Mikrokapseln nach einem der Ansprüche 1 oder 2, **dadurch gekennzeichnet, dass** Kapselwand (B) ein Copolymer ist, das aufgebaut ist aus
| | |
|---|---|
| 30 bis 90 Gew.-% | eines oder mehrerer Monomere I, |
| 10 bis 70 Gew.-% | eines oder mehrerer Monomere II sowie |
| 0 bis 30 Gew.-% | eines oder mehrerer Monomere III. |

4. Mikrokapseln nach einem der Ansprüche 1 bis 3, **dadurch gekennzeichnet, dass** Monomer II gewählt wird aus einer Mischung aus Divinyl- und Polyvinylmonomeren, wobei der Anteil der Polyvinylmonomere 2 bis 90 Gew.-% beträgt, bezogen auf die Monomere 11.

5. Mikrokapseln nach einem der Ansprüche 1 bis 4, **dadurch gekennzeichnet, dass** die Kapselwand (B) aus mindestens zwei verschiedenen Monomeren I, gegebenenfalls mindestens einem Monomer 11 und gegebenenfalls mindestens einem Monomer III aufgebaut ist.

6. Verwendung von Mikrokapseln nach einem der Ansprüche 1 bis 5 zur Ausrüstung von flächigen Substraten.

7. Verfahren zur Ausrüstung von flächigen Substraten unter Verwendung von Mikrokapseln nach einem der Ansprüche 1 bis 5.

8. Flächige Substrate, ausgerüstet mit Mikrokapseln nach einem der Ansprüche 1 bis 5.

9. Substrate nach Anspruch 8, **dadurch gekennzeichnet, dass** sie gewählt sind aus faserigen Substraten und Baustoffen.

10. Verfahren zur Herstellung von Mikrokapseln, **dadurch gekennzeichnet, dass** man in Gegenwart von
(A) im Bereich von 50 bis 95 Gewichtsteilen lipophilen Kernmaterials, das einen Phasenübergang fest/flüssig im Temperaturbereich von -20 bis 120°C aufweist,
(C) im Bereich von 0,01 bis 10 Gewichtsteilen mindestens eines farbigen oder Farbe gebenden Stoffs, ausgewählt aus öllöslichen Farbstoffen und öllöslichen Aufhellern,
im Bereich von 4 bis 50 Gewichtsteilen eines Monomers oder eines Gemischs von Monomeren (co)polymerisiert:
| | |
|---|---|
| 30 bis 100 Gew.-% | mindestens eines Monomeren (Monomer I), gewählt aus Acrylsäure, Methacrylsäure, Maleinsäure und C₁-C₂₄-Alkylestern der (Meth)acrylsäure, |
| 0 bis 70 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |
wobei Angaben in Gew.-% bezogen sind auf das Gesamtgewicht der Monomere I, II und III,
und wobei Angaben in Gewichtsteilen auf das Gesamtgewicht der fertigen Mikrokapseln bezogen sind.

11. Verfahren nach Anspruch 10, **dadurch gekennzeichnet, dass** man die (Co)polymerisationstemperatur oberhalb der Temperatur wählt, bei der lipophiles Kernmaterial (A) seinen Phasenübergang fest/flüssig hat.

12. Wässrige Formulierungen, enthaltend Mikrokapseln nach einem der Ansprüche 1 bis 5.

13. Wässrige Formulierungen nach Anspruch 12, enthaltend weiterhin mindestens ein Bindemittel.

## Claims

1. A microcapsule comprising
(A) in the range from 50 to 95 parts by weight, lipophilic core material which has a solid/liquid phase transition in the temperature range from -20 to 120°C,
(B) in the range from 4 to 50 parts by weight, capsule wall, and
(C) in the range from 0.01 to 10 parts by weight, at least one colored or color-imparting substance selected from oil-soluble dyes and oil-soluble brighteners,
where data in parts by weight are based on the total weight of the microcapsules in question,
where the capsule wall (B) is a (co)polymer which is composed of
| | |
|---|---|
| 30 to 100% | by weight of at least one monomer (monomer I), selected from acrylic acid, methacrylic acid, maleic acid and C₁-C₂₄-alkyl esters of (meth)acrylic acid, |
| 0 to 70% | by weight of one or more bi- or polyfunctional monomers (monomers II), which is or are insoluble or sparingly soluble in water and |
| 0 to 40% | by weight of one or more other monomers |
| | (monomers III), |
where data in % by weight are based on the total weight of the capsule wall (B).

2. The microcapsule according to claim 1, wherein it has an average diameter in the range from 0.5 to 100 µm (number-average), determined by light scattering.

3. The microcapsule according to either of claims 1 and 2, wherein the capsule wall (B) is a copolymer, which is composed of
30 to 90% by weight of one or more monomers I,
10 to 70% by weight of one or more monomers II and
0 to 30% by weight of one or more monomers III.

4. The microcapsule according to any one of claims 1 to 3, wherein monomer II is selected from a mixture of divinyl and polyvinyl monomers, where the fraction of the polyvinyl monomers is 2 to 90% by weight, based on the monomers II.

5. The microcapsule according to any one of claims 1 to 4, wherein the capsule wall (B) is composed of at least two different monomers I, optionally at least one monomer II and optionally at least one monomer III.

6. The use of microcapsules according to any one of claims 1 to 5 for the finishing of areal substrates.

7. A method of finishing areal substrates using microcapsules according to any one of claims 1 to 5.

8. An areal substrate finished with microcapsules according to any one of claims 1 to 5.

9. The substrate according to claim 8, wherein it is selected from fibrous substrates and building materials.

10. A method of producing microcapsules, which comprises (co)polymerizing, in the presence of
(A) in the range from 50 to 95 parts by weight, lipophilic core material which has a solid/liquid phase transition in the temperature range from -20 to 120°C,
(C) in the range from 0.01 to 10 parts by weight, at least one colored or color-imparting substance selected from oil-soluble dyes and oil-soluble brighteners,
in the range from 4 to 50 parts by weight of a monomer or a mixture of monomers:
| | |
|---|---|
| 30 to 100% | by weight of at least one monomer (monomer I), selected from acrylic acid, methacrylic acid, maleic acid and C₁-C₂₄-alkyl esters of (meth)acrylic acid, |
| 0 to 70% | by weight of one or more bi- or polyfunctional monomers (monomers II), which is or are insoluble or sparingly soluble in water and |
| 0 to 40% | by weight of one or more other monomers (monomers III), |
where data in % by weight are based on the total weight of the monomers I, II and III, and where data in parts by weight are based on the total weight of the finished microcapsules.

11. The method according to claim 10, wherein the (co)polymerization temperature chosen is above the temperature at which lipophilic core material (A) has its solid/liquid phase transition.

12. An aqueous formulation comprising microcapsules according to any one of claims 1 to 5.

13. The aqueous formulation according to claim 12, further comprising at least one binder.

## Revendications

1. Microcapsules, comprenant :
(A) dans la plage allant de 50 à 95 parties en poids d'un matériau de noyau lipophile, qui présente une transition de phases solide/liquide dans la plage de températures allant de -20 à 120 °C,
(B) dans la plage allant de 4 à 50 parties en poids d'une paroi de capsule, et
(C) dans la plage allant de 0,01 à 10 parties en poids d'au moins substance colorée ou colorante, choisie parmi les colorants solubles dans les huiles et les éclaircissants solubles dans les huiles,
les données en parties en poids se rapportant au poids total des microcapsules en question,
la paroi de capsule (B) étant un (co)polymère constitué par
30 à 100 % en poids d'au moins un monomère (monomère (I) choisi parmi l'acide acrylique, l'acide méthacrylique, l'acide maléique et un ester alkylique en C₁-C₂₄ de l'acide (méth)acrylique,
0 à 70 % en poids d'un ou de plusieurs monomères bi- ou polyfonctionnels (monomères II) qui ne sont pas solubles dans l'eau ou qui sont difficilement solubles dans l'eau, et
0 à 40 % en poids d'un ou de plusieurs autres monomères (monomères III),
les données en % en poids se rapportant au poids total de la paroi de capsule (B).

2. Microcapsules selon la revendication 1, **caractérisées en ce qu'**elles présentent un diamètre moyen dans la plage allant de 0,5 à 100 µm (moyenne Z), déterminé par diffusion de lumière.

3. Microcapsules selon l'une quelconque des revendications 1 ou 2, **caractérisées en ce que** la paroi de capsule (B) est un copolymère constitué par 30 à 90 % en poids d'un ou de plusieurs monomères I,
10 à 70 % en poids d'un ou de plusieurs monomères II, et
0 à 30 % en poids d'un ou de plusieurs monomères III.

4. Microcapsules selon l'une quelconque des revendications 1 à 3, **caractérisées en ce que** le monomère II est choisi parmi un mélange de monomères divinyliques et polyvinyliques, la proportion des monomères polyvinyliques étant de 2 à 90 % en poids, par rapport aux monomères II.

5. Microcapsules selon l'une quelconque des revendications 1 à 4, **caractérisées en ce que** la paroi de capsule (B) est constituée par au moins deux monomères I différents, éventuellement au moins un monomère II et éventuellement au moins un monomère III.

6. Utilisation de microcapsules selon l'une quelconque des revendications 1 à 5 pour le traitement de substrats plats.

7. Procédé de traitement de substrats plats utilisant des microcapsules selon l'une quelconque des revendications 1 à 5.

8. Substrats plats, traités avec des microcapsules selon l'une quelconque des revendications 1 à 5.

9. Substrats selon la revendication 8, **caractérisés en ce qu'**ils sont choisis parmi les substrats fibreux et les matériaux de construction.

10. Procédé de fabrication de microcapsules, **caractérisé en ce qu'**en présence de
(A) dans la plage allant de 50 à 95 parties en poids d'un matériau de noyau lipophile, qui présente une transition de phases solide/liquide dans la plage de températures allant de -20 à 120 °C,
(C) dans la plage allant de 0,01 à 10 parties en poids d'au moins substance colorée ou colorante, choisie parmi les colorants solubles dans les huiles et les éclaircissants solubles dans les huiles,
dans la plage allant de 4 à 50 parties en poids d'un monomère ou d'un mélange de monomères sont (co)polymérisées :
30 à 100 % en poids d'au moins un monomère (monomère (I) choisi parmi l'acide acrylique, l'acide méthacrylique, l'acide maléique et un ester alkylique en C₁-C₂₄ de l'acide (méth)acrylique,
0 à 70 % en poids d'un ou de plusieurs monomères bi- ou polyfonctionnels (monomères II) qui ne sont pas solubles dans l'eau ou qui sont difficilement solubles dans l'eau, et
0 à 40 % en poids d'un ou de plusieurs autres monomères (monomères III),
les données en % en poids se rapportant au poids total des monomères I, II et III,
et les données en parties en poids se rapportant au poids total des microcapsules finies.

11. Procédé selon la revendication 10, **caractérisé en ce que** la température de (co)polymérisation est choisie supérieure à la température de la transition de phases solide/liquide du matériau de noyau lipophile (A).

12. Formulations aqueuses, contenant des microcapsules selon l'une quelconque des revendications 1 à 5.

13. Formulations aqueuses selon la revendication 12, contenant également au moins un liant.
